(19) Europäisches Patentamt
European Patent Office
Office européen des brevets

(11) **EP 4 369 744 A1**

(12) **EUROPEAN PATENT APPLICATION**
published in accordance with Art. 153(4) EPC

(43) Date of publication:
**15.05.2024 Bulletin 2024/20**

(21) Application number: **21953151.4**

(22) Date of filing: **12.08.2021**

(51) International Patent Classification (IPC):
***H04W 4/029*** (2018.01)

(52) Cooperative Patent Classification (CPC):
**H04W 4/029**

(86) International application number:
**PCT/CN2021/112347**

(87) International publication number:
**WO 2023/015534 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• **LIU, Yongjun
Shenzhen, Guangdong 518129 (CN)**
• **HUANG, Qirui
Shenzhen, Guangdong 518129 (CN)**
• **LIU, Chang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **POSITIONING METHOD, TRANSMITTNG END, RECEIVING END, AND COMPUTER READABLE STORAGE MEDIUM**

(57) A positioning method, a transmit end, a receive end, and a computer-readable storage medium are provided. The positioning method includes: transmitting at least two non-diffracting beams to the receive end, where each non-diffracting beam carries corresponding first curve information, and the first curve information indicates a trajectory of the non-diffracting beam (S301); receiving feedback information that corresponds to the at least two non-diffracting beams and that is sent by the receive end, where the feedback information carries second curve information (S302); and determining a first position of the receive end in a first preset coordinate system based on second curve information of the at least two non-diffracting beams (S303). A non-diffracting beam on which the receive end is located is determined based on the curve information fed back by the receive end, so that a position of the receive end can be determined based on the curve information of the at least two non-diffracting beams, and the receive end is positioned based on a feature that a peak intensity of a light field of the non-diffracting beam does not change with a propagation distance, to improve positioning precision.

FIG. 4

## Description

## TECHNICAL FIELD

Embodiments of this application relate to the field of positioning technologies, and in particular, to a positioning method, a transmit end, a receive end, and a computer-readable storage medium.

## BACKGROUND

With popularization of electronic products, positioning functions of electronic products are increasingly popular, and auxiliary functions such as tracking and navigation may be implemented through positioning.

Currently, a position of a terminal is usually determined by using a satellite, Wi-Fi, Bluetooth, or the like. For example, the position of the terminal is estimated based on a distance from the terminal to a plurality of anchor nodes, or the position of the terminal is estimated based on a distance and an angle between the terminal and a single anchor node, or the position of the terminal is estimated based on an angle between the terminal and a plurality of anchor nodes.

However, in a method for determining a terminal position based on a distance between a terminal and an anchor node, distance measurement information of three or more anchor nodes is required, positioning precision is limited by a quantity of anchor nodes, and anchor node deployment costs are relatively high. A method for determining a terminal position based on an angle measurement manner usually depends on an antenna array to measure a signal transmitting or receiving angle. However, signal angle measurement precision is generally relatively low, and angle precision depends on a signal beam width. A fine signal beam width needs to be implemented by using a large-scale array or aperture, and a minimum beam angle cannot be less than a diffraction limit of $1.22\lambda/D$ rad ($\lambda$ is a signal wavelength, and D is an antenna aperture). A small beam also has a sidelobe interference problem.

## SUMMARY

Embodiments of this application disclose a positioning method, a transmit end, a receive end, and a computer-readable storage medium, so as to determine a terminal position based on curve information of a non-diffracting beam, thereby improving positioning precision and reducing positioning costs.

A first aspect of this application discloses a positioning method, applied to a positioning system, where the positioning system includes a transmit end and a receive end, the transmit end is configured to transmit a non-diffracting beam, the receive end is configured to receive the non-diffracting beam, and the positioning method includes:
transmitting at least two non-diffracting beams to the receive end, where each non-diffracting beam carries corresponding first curve information, and the first curve information indicates a trajectory of a non-diffracting beam on which the transmit end is located; and determining, by the receive end, a position of the receive end based on the first curve information corresponding to the at least two non-diffracting beams.

In this embodiment of this application, the receive end receives the first curve information that is carried by the non-diffracting beam and that is transmitted by the transmit end, to determine the first curve information of the trajectory of the non-diffracting beam on which the receive end is located, and determines a first position of the receive end by using the curve information corresponding to the at least two non-diffracting beams. In this application, positioning is performed based on a propagation feature of the non-diffracting beam, thereby improving positioning precision, and reducing deployment costs of the transmit end required for positioning the receive end.

In some optional implementations, the positioning method further includes:

receiving, from the receive end, feedback information corresponding to each non-diffracting beam, where the feedback information includes second curve information corresponding to each non-diffracting beam, the feedback information is generated by the receive end based on the first curve information carried by each received non-diffracting beam, and the second curve information indicates a trajectory of a non-diffracting beam on which the receive end is located; and
determining a first position of the receive end based on the second curve information of the at least two non-diffracting beams.

In this way, the receive end may determine the position of the receive end based on the curve information of the at least two non-diffracting beams. This is easy to operate, easy to implement, and has relatively high positioning precision.

In some optional implementations, the feedback information further includes signal strength, and before the determining a first position of the receive end based on the curve information of the at least two non-diffracting beams, the positioning method further includes:
determining, based on the feedback information, second curve information corresponding to the highest signal strength.

In this way, the transmit end determines one of the plurality of non-diffracting beams based on the highest signal strength, to improve positioning precision, so as to reduce operations of the receive end.

In some optional implementations, the determining a first position of the receive end based on the second curve information of the at least two non-diffracting beams includes:

determining, based on at least two pieces of second curve information, curve equations corresponding to the at least two non-diffracting beams on which the receive end is located; and

determining the first position of the receive end according to the at least two curve equations.

In this way, the transmit end determines, based on the feedback information, each curve equation corresponding to the trajectory of the non-diffracting beam on which the receive end is located, and determines the first position of the receive end according to the at least two curve equations. In this application, positioning is performed based on a propagation feature of the non-diffracting beam, thereby improving positioning precision and reducing deployment costs of the transmit end.

In some optional implementations, the positioning system includes a plurality of transmit ends, and the plurality of transmit ends are configured to transmit non-diffracting beams to the receive end.

In this way, the plurality of transmit ends simultaneously position one receive end, to improve positioning precision.

In some optional implementations, the positioning system includes a plurality of receive ends, and each transmit end is configured to transmit a non-diffracting beam to the plurality of receive ends.

In this way, one transmit end transmits a non-diffracting beam to the plurality of receive ends, and the plurality of receive ends position the transmit end for a plurality of times, to improve positioning precision.

In some optional implementations, if a quantity of non-diffracting beams transmitted by the transmit end to the receive end is greater than or equal to three, the determining the first position of the receive end according to the at least two curve equations specifically includes:

forming an overdetermined equation set according to the curve equations corresponding to the at least three non-diffracting beams;

obtaining a solution of the overdetermined equation set, where the solution is coordinates of the receive end in a first preset coordinate system; and

determining the first position based on the coordinates.

In this way, the overdetermined equation set is formed by using the at least three curve equations, and the overdetermined equation set is solved, so as to improve positioning precision of the receive end.

In some optional implementations, the positioning method further includes:

determining a weighted value based on the signal strength and a preset weighted function, where the weighted function is used to limit an impact degree of the signal strength; and

adjusting the first position based on the weighted value.

Therefore, a weighted function is introduced to adjust functions of non-diffracting beams corresponding to different signal strength in a positioning process, so as to improve positioning precision.

In some optional implementations, the positioning method further includes:

obtaining a second position of the transmit end;

determining a positional relationship between the transmit end and the receive end based on the first position and the second position;

obtaining a third position of the receive end in a second preset coordinate system, where the second preset coordinate system is established based on the third position of the receive end; and

determining a fourth position of the transmit end in the second preset coordinate system based on the positional relationship and the third position.

In this way, a position transformation between the receive end and the transmit end is implemented based on a positional relationship, so that the positioning method adapts to different scenarios.

In some optional implementations, a transmitter is disposed at the transmit end, the transmitter includes a spatial modulator, and the positioning method further includes:

adjusting a modulation range of the spatial modulator to increase a main lobe width of the non-diffracting beam.

In this way, the main lobe width of the non-diffracting beam is increased, and a scanning range of the non-diffracting beam is increased, so as to reduce a scanning time and improve scanning efficiency and positioning efficiency.

In some optional implementations, a communication connection may be established between the transmit end and the receive end, and before the transmitting at least two non-diffracting beams to the receive end, the positioning method further includes:

establishing a communication connection to the receive end;

determining an area in which the receive end is located based on the communication connection; and

determining transmitting areas of the at least two non-diffracting beams based on an area in which the receive end is located.

In this way, an area in which the receive end is located is determined by establishing the communication connection, so as to determine the transmitting areas of the non-diffracting beams. That is, the receive end is initially positioned, so as to limit a scanning range of each non-diffracting beam, thereby reducing a scanning time and improving positioning efficiency.

A second aspect of this application discloses a positioning method, applied to a positioning system, where the positioning system includes a transmit end and a receive end, the transmit end is configured to transmit a non-diffracting beam, the receive end is configured to receive the non-diffracting beam, and the positioning method includes:

transmitting at least one non-diffracting beams to the receive end, where each non-diffracting beam carries corresponding first curve information, and the first curve information indicates a trajectory of a non-diffracting beam on which a transmit end is located; receiving feedback information that corresponds to at least one non-diffracting beam and that is transmitted by the receive end, where the feedback information is generated by the receive end based on the first curve information carried by the received non-diffracting beam, the feedback information includes second curve information and first time information, the first time information includes a receiving time at which the receive end receives the non-diffracting beam and a transmitting time at which the receive end transmits the feedback information, and the second curve information indicates a trajectory of a non-diffracting beam on which the receive end is located; and

obtaining second time information, where the second time information includes a second transmitting time at which the transmit end transmits the non-diffracting beam and a second receiving time at which the transmit end receives the feedback information; and

determining a first position of the receive end based on the first time information, the second time information, and the second curve information.

In this way, the time information is carried in the feedback information, so that the transmit end can position the receive end by using the at least one non-diffracting beam, thereby reducing difficulty in positioning the receive end.

In some optional implementations, the feedback information further includes signal strength, and after the feedback information that corresponds to the at least one non-diffracting beam and that is transmitted by the receive end is received, the positioning method further includes:

determining, based on the feedback information, second curve information and first time information that correspond to the highest signal strength.

In some optional implementations, the determining a first position of the receive end based on the first time information, the second time information, and the second curve information includes:

determining second curve information corresponding to the highest signal strength;

determining, based on the second curve information, a curve equation corresponding to the trajectory of the non-diffracting beam on which the receive end is located;

determining a curve length parameter according to the curve equation, where the curve length parameter indicates a trajectory length between any point on the trajectory of the non-diffracting beam and the transmit end;

determining a transmission time based on the first time information and the second time information;

obtaining a transmission distance based on the transmission time and preset speed information, where the speed information includes a propagation speed of the non-diffracting beam and a transmission speed of the feedback information; and

determining the first position of the receive end based on the transmission distance, the curve length parameter, and the second curve information.

In this way, in this embodiment of this application, the time information included in the feedback information is used, so that the receive end can be positioned by using the at least one non-diffracting beam.

In some optional implementations, the positioning system includes a plurality of transmit ends, and the plurality of transmit ends are configured to transmit non-diffracting beams to the receive end.

In some optional implementations, the positioning system includes a plurality of receive ends, and each transmit end is configured to transmit a non-diffracting beam to the plurality of receive ends.

In some optional implementations, a quantity of non-diffracting beams transmitted by the transmit end to the receive end is greater than or equal to three, and the determining the first position of the receive end based on at least two pieces of second curve information specifically includes:

forming an overdetermined equation set according to the curve equations corresponding to the at least three non-diffracting beams;

obtaining a solution of the overdetermined equation set, where the solution is coordinates of the receive end in a first preset coordinate system; and

determining the first position based on the coordinates.

In some optional implementations, the positioning method further includes:

determining a weighted value based on the signal strength and a preset weighted function, where the weighted function is used to limit an impact degree of the signal strength; and

adjusting the first position based on the weighted value.

In some optional implementations, the positioning method further includes:

> obtaining a second position of the transmit end;
> determining a positional relationship between the transmit end and the receive end based on the first position and the second position;
> obtaining a third position of the receive end in a second preset coordinate system; and
> determining a fourth position of the transmit end in the second preset coordinate system based on the positional relationship and the third position.

In some optional implementations, a transmitter is disposed at the transmit end, the transmitter includes a spatial modulator, and the positioning method further includes:
adjusting a modulation range of the spatial modulator to increase a main lobe width of the non-diffracting beam.

In some optional implementations, a communication connection may be established between the transmit end and the receive end, and before the transmitting at least two non-diffracting beams to the receive end, the positioning method further includes:

> establishing a communication connection to the receive end;
> determining an area in which the receive end is located based on the communication connection; and
> determining transmitting areas of the at least two non-diffracting beams based on an area in which the receive end is located.

A third aspect of this application discloses a positioning method, applied to a positioning system, where the positioning system includes a transmit end and a receive end, the transmit end is configured to transmit a non-diffracting beam, the receive end is configured to receive the non-diffracting beam, and the positioning method includes:

> receiving at least two non-diffracting beams transmitted by the transmit end, where each non-diffracting beam carries corresponding first curve information, and the first curve information indicates a trajectory of a non-diffracting beam on which the transmit end is located;
> determining second curve information based on the first curve information carried by each received non-diffracting beam, where the second curve information indicates a trajectory of a non-diffracting beam on which the receive end is located;
> obtaining signal strength information of the at least two non-diffracting beams, where the signal strength information includes signal strength corresponding to each non-diffracting beam;
> determining whether the signal strength is greater than a preset value;

> if the signal strength is greater than the preset value, obtaining the second curve information of the non-diffracting beam corresponding to the signal strength; and
> determining a first position of the receive end based on the second curve information of at least two non-diffracting beams whose signal strength is greater than the preset value.

In some optional implementations, the determining a first position of the receive end based on second curve information of at least two non-diffracting beams specifically includes:

> obtaining, based on the second curve information, curve equations corresponding to the at least two non-diffracting beams; and
> obtaining the first position of the receive end according to the at least two curve equations.

In some optional implementations, the positioning system includes a plurality of transmit ends, and the plurality of transmit ends are configured to transmit non-diffracting beams to the receive end.

In some optional implementations, the positioning system includes a plurality of receive ends, and each transmit end is configured to transmit a non-diffracting beam to the plurality of receive ends.

In some optional implementations, the transmit end transmits at least three non-diffracting beams to the receive end, and the determining the first position of the receive end according to the at least two curve equations specifically includes:

> forming an overdetermined equation set according to the curve equations corresponding to the at least three non-diffracting beams;
> obtaining a solution of the overdetermined equation set, where the solution is coordinates of the receive end in a first preset coordinate system; and
> determining the first position based on the coordinates.

In some optional implementations, the positioning method further includes:

> determining a weighted value based on the signal strength and a preset weighted function, where the weighted function is used to limit an impact degree of the signal strength; and
> adjusting the first position based on the weighted value.

In some optional implementations, the positioning method further includes:

> obtaining a second position of the transmit end;
> determining a positional relationship between the transmit end and the receive end based on the first position and the second position;

obtaining a third position of the receive end in a second preset coordinate system, where the second preset coordinate system is established based on the third position of the receive end; and

determining a fourth position of the transmit end in the second preset coordinate system based on the positional relationship and the third position.

In some optional implementations, a communication connection may be established between the transmit end and the receive end, and before the transmitting at least two non-diffracting beams to the receive end, the positioning method further includes:

establishing a communication connection to the transmit end;

determining an area in which the receive end is located based on the communication connection; and

determining transmitting areas of the at least two non-diffracting beams based on an area in which the receive end is located.

A fourth aspect of this application discloses a transmit end, applied to a positioning system, where the positioning system further includes a receive end, the transmit end is configured to transmit a non-diffracting beam, the receive end is configured to receive the non-diffracting beam, and the receive end includes a processor and a memory; the memory is configured to store instructions; and the processor is configured to invoke the instructions in the memory, so that the transmit end performs the positioning method according to any one of the first aspect or the second aspect or the possible implementations of the first aspect or the second aspect.

A fifth aspect of this application discloses a receive end, applied to a positioning system, where the positioning system further includes a transmit end, the transmit end is configured to transmit a non-diffracting beam, the receive end is configured to receive the non-diffracting beam, and the receive end includes a processor and a memory; the memory is configured to store instructions; and the processor is configured to invoke the instructions in the memory, so that the receive end performs the positioning method according to any one of the third aspect or the possible implementations of the third aspect.

A sixth aspect of this application discloses a transmit end, applied to a positioning system, where the positioning system further includes a receive end, the transmit end is configured to transmit a non-diffracting beam, the receive end is configured to receive the non-diffracting beam, and the transmit end includes:

a transmitting unit, configured to transmit at least two non-diffracting beams to a receive end, where each non-diffracting beam carries corresponding first curve information, and the first curve information indicates a trajectory of a non-diffracting beam on which a transmit end is located;

a receiving unit, configured to receive feedback information that corresponds to at least two non-diffracting beams and that is transmitted by the receive end, where the feedback information is generated by the receive end based on the first curve information carried by the received non-diffracting beam, the feedback information includes second curve information, and the second curve information indicates a trajectory of a non-diffracting beam on which the receive end is located; and

a processor, coupled to both the transmitting unit and the receiving unit, and configured to determine a first position of the receive end based on the curve information.

In some optional implementations, the feedback information further includes signal strength, and the processor is further configured to:
determine, based on the feedback information, second curve information corresponding to the highest signal strength.

In some optional implementations, the processor is further configured to:

determine, based on the second curve information, curve equations corresponding to trajectories of at least two non-diffracting beams on which the receive end is located; and

determine the first position of the receive end according to the at least two curve equations.

In some optional implementations, a quantity of non-diffracting beams transmitted by the transmit end to the receive end is greater than or equal to three, and the processor is further configured to:

form an overdetermined equation set according to the curve equations corresponding to the at least three non-diffracting beams;

obtain a solution of the overdetermined equation set, where the solution is coordinates of the receive end in a first preset coordinate system; and

determine the first position based on the coordinates.

In some optional implementations, the processor is further configured to:

determine a weighted value based on the signal strength and a preset weighted function, where the weighted function is used to limit an impact degree of the signal strength; and

adjust the first position based on the weighted value.

In some optional implementations, the processor is further configured to:

obtain a second position of the transmit end;
determine a positional relationship between the transmit end and the receive end based on the first position and the second position;
obtain a third position of the receive end in a second preset coordinate system, where the second preset coordinate system is established based on the third position of the receive end; and
determine a fourth position of the transmit end in the second preset coordinate system based on the positional relationship and the third position.

In some optional implementations, a non-diffracting beam transmitter is disposed in the transmitting unit, the non-diffracting beam transmitter includes a spatial modulator, and the processor is further configured to:
adjust a modulation range of the spatial modulator to increase a main lobe width of the non-diffracting beam.

In some optional implementations, the processor is further configured to:

establish a communication connection to the receive end;
determine an area in which the receive end is located based on the communication connection; and
determine transmitting areas of the at least two non-diffracting beams based on an area in which the receive end is located.

A seventh aspect discloses a transmit end, applied to a positioning system, where the positioning system further includes a receive end, the transmit end is configured to transmit a non-diffracting beam, the receive end is configured to receive the non-diffracting beam, and the transmit end includes:

a transmitting unit, configured to transmit at least one non-diffracting beams to the receive end, where each non-diffracting beam carries corresponding first curve information, and the first curve information indicates a trajectory of a non-diffracting beam on which a transmit end is located;
a receiving unit, configured to receive feedback information that corresponds to at least one non-diffracting beam and that is transmitted by the receive end, where the feedback information is generated by the receive end based on the first curve information carried by the received non-diffracting beam, the feedback information includes curve information and first time information, the first time information includes a receiving time at which the receive end receives the non-diffracting beam and a transmitting time at which the receive end transmits the feedback information, and the second curve information indicates a trajectory of a non-diffracting beam on which the receive end is located; and
a processor, coupled to both the transmitting unit and the receiving unit, and configured to: obtain second time information, where the second time information includes a transmitting time at which the transmit end transmits the non-diffracting beam and a receiving time at which the transmit end receives the feedback information; determine the first position of the receive end based on the first time information, the second time information, and the second curve information.

In some optional implementations, the feedback information further includes signal strength, and the processor is further configured to:
determine, based on the feedback information, second curve information and first time information that correspond to the highest signal strength.

In some optional implementations, the processor is further configured to:

determine, based on the curve information, a curve equation corresponding to the trajectory of the non-diffracting beam on which the receive end is located;
determine a curve length parameter according to the curve equation, where the curve length parameter indicates a trajectory length between any point on the trajectory of the non-diffracting beam and the transmit end;
determine a transmission time based on the first time information and the second time information;
obtain a transmission distance based on the transmission time and preset speed information, where the speed information includes a propagation speed of the non-diffracting beam and a transmission speed of the feedback information; and
determine the first position of the receive end based on the transmission distance, the curve length parameter, and the second curve information.

In some optional implementations, the transmit end transmits at least three non-diffracting beams to the receive end, and the processor is further configured to:

form an overdetermined equation set according to the curve equations corresponding to the at least three non-diffracting beams;
obtain a solution of the overdetermined equation set, where the solution is coordinates of the receive end in a first preset coordinate system; and
determine the first position based on the coordinates.

In some optional implementations, the processor is further configured to:

determine a weighted value based on the signal strength and a preset weighted function, where the weighted function is used to limit an impact degree of the signal strength; and
adjust the first position based on the weighted value.

In some optional implementations, the processor is further configured to:

> obtain a second position of the transmit end;
> determine a positional relationship between the transmit end and the receive end based on the first position and the second position;
> obtain a third position of the receive end in a second preset coordinate system, where the second preset coordinate system is established based on the third position of the receive end; and
> determine a fourth position of the transmit end in the second preset coordinate system based on the positional relationship and the third position.

In some optional implementations, a transmitter is disposed in the transmitting unit, the transmitter includes a spatial modulator, and the processor is further configured to:
adjust a modulation range of the spatial modulator to increase a main lobe width of the non-diffracting beam.

In some optional implementations, the transmit end further includes a communication unit, and the communication unit is configured to establish a communication connection to the receive end; and
the processor is further configured to:

> determine an area in which the receive end is located based on the communication connection; and
> determine transmitting areas of the at least two non-diffracting beams based on an area in which the receive end is located.

An eighth aspect discloses a receive end, applied to a positioning system, where the positioning system further includes a transmit end, the transmit end is configured to transmit a non-diffracting beam, the receive end is configured to receive the non-diffracting beam, and the receive end includes:

> a receiving unit, configured to receive at least two non-diffracting beams transmitted by a transmit end, where each non-diffracting beam carries corresponding first curve information, and the first curve information indicates a trajectory of a non-diffracting beam on which the transmit end is located; and
> a processor, coupled to the receiving unit, and configured to determine second curve information based on the first curve information carried by each received non-diffracting beam, where the second curve information indicates a trajectory of a non-diffracting beam on which the receive end is located; and further configured to: obtain signal strength information of the at least two non-diffracting beams, where the signal strength information includes signal strength corresponding to each non-diffracting beam; determine whether the signal strength is greater than a preset value; and if the signal strength is greater than the preset value, obtain second curve information of the non-diffracting beam corresponding to the signal strength; and determine a first position of the receive end based on second curve information of at least two non-diffracting beams whose signal strength is greater than the preset value.

In some optional implementations, the processor is further configured to:

> obtain, based on the second curve information, curve equations corresponding to the at least two non-diffracting beams; and
> determine the first position of the receive end according to the at least two curve equations.

In some optional implementations, if a quantity of non-diffracting beams transmitted by the transmit end to the receive end is greater than or equal to three, the processor is further configured to:

> form an overdetermined equation set according to the curve equations corresponding to the at least three non-diffracting beams;
> obtain a solution of the overdetermined equation set, where the solution is coordinates of the receive end in a first preset coordinate system; and
> determine the first position of the receive end based on the coordinates.

In some optional implementations, the processor is further configured to:

> determine a weighted value based on the signal strength and a preset weighted function, where the weighted function is used to limit an impact degree of the signal strength; and
> adjust the first position based on the weighted value.

In some optional implementations, the processor is further configured to:

> obtain a second position of the transmit end;
> determine a positional relationship between the transmit end and the receive end based on the first position and the second position;
> obtain a third position of the receive end in a second preset coordinate system, where the second preset coordinate system is established based on the third position of the receive end; and
> determine a fourth position of the transmit end in the second preset coordinate system based on the positional relationship and the third position.

A ninth aspect of this application discloses a computer-readable storage medium. The computer-readable storage medium stores at least one instruction, and when the at least one instruction is executed by a processor, the positioning method according to any one of the first aspect to the third aspect or the possible implementations of the first aspect to the third aspect is implemented.

In addition, for technical effects brought by the second aspect to the ninth aspect, refer to method-related descriptions in each of the foregoing method sections. Details are not described herein again.

## BRIEF DESCRIPTION OF DRAWINGS

FIG. 1 is a schematic diagram of environment of a positioning system according to an embodiment of this application;

FIG. 2 is a schematic diagram of a structure of a transmitter according to an embodiment of this application;

FIG. 3A, FIG. 3B, and FIG. 3C are schematic diagrams of non-diffracting beams according to an embodiment of this application;

FIG. 4 is a flowchart of a positioning method according to an embodiment of this application;

FIG. 5 is a flowchart of a receive end position solving method according to an embodiment of this application;

FIG. 6 is a flowchart of a position transformation method according to an embodiment of this application;

FIG. 7 is a flowchart of a pre-positioning method according to an embodiment of this application;

FIG. 8 is a flowchart of another positioning method according to an embodiment of this application;

FIG. 9 is a flowchart of another receive end position solving method according to an embodiment of this application;

FIG. 10 is a flowchart of still another positioning method according to an embodiment of this application;

FIG. 11 is a schematic diagram of a transmit end apparatus according to an embodiment of this application; and

FIG. 12 is a schematic diagram of a receive end apparatus according to an embodiment of this application.

## DESCRIPTION OF EMBODIMENTS

For ease of understanding, descriptions of some concepts related to embodiments of this application are provided as examples for reference, as shown in the following:

It should be noted that in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In this specification, claims, and accompanying drawings of this application, terms "first", "second", "third", "fourth", and the like (if existent) are intended to distinguish between similar objects but do not necessarily indicate a specific order or sequence.

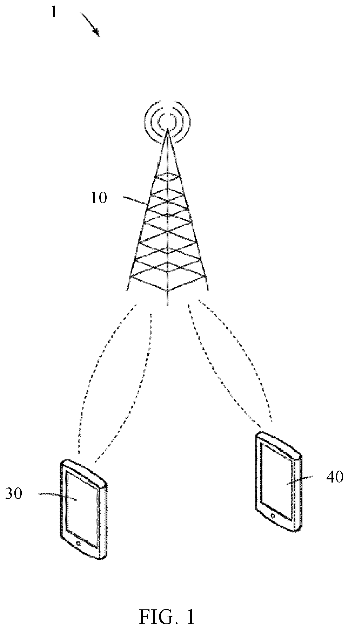

For ease of understanding embodiments of this application, a communication system applicable to embodiments of this application is first briefly described with reference to FIG. 1. FIG. 1 is a schematic diagram of a positioning system 1 applicable to an embodiment of this application. As shown in FIG. 1, the positioning system 1 includes an anchor node 10, and the positioning system 1 further includes user equipment 30 and user equipment 40 that are located within a coverage area of the anchor node 10.

Optionally, the anchor node 10 may communicate with the user equipment 30 and the user equipment 40.

It should be understood that, in FIG. 1, only the two pieces of user equipment in the coverage area of the anchor node 10 are used as an example. Apparently, there may also be more user equipment in the coverage area of the anchor node 10, and the positioning system 1 may include more anchor nodes.

The user equipment in this embodiment of this application may be referred to a terminal device, an access terminal, a subscriber unit, a subscriber station, a mobile station, a remote station, a remote terminal, a mobile device, a user terminal, a terminal, a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a future 5G network, user equipment in a future evolved public land mobile network (public land mobile network, PLMN), or the like. This is not limited in this embodiment of this application.

The anchor node in this embodiment of this application may be a device configured to communicate with the user equipment. The anchor node may be a nodeB (nodeB, NB), an evolved nodeB (evolved nodeB, eNB), a gNodeB in NR in a 5G mobile positioning system, a base station in a future mobile positioning system, an access node in a Wi-Fi system, or the like. Neither a specific technology used by the anchor node and a specific device form of the anchor node is limited in this embodiment of this application. Unless otherwise stated, in this application, expressions of a 5G system and an NR system are interchangeable.

One of the anchor node and the user equipment in this embodiment of this application is a receive end, and the other is a transmit end. To be specific, if the user equipment is a transmit end, the anchor node is a receive end; or if the anchor node is a transmit end, the user equipment is a receive end. A non-diffracting beam transmitter is disposed at the transmit end, and a non-diffracting beam receiver is disposed at the receive end. The non-diffracting beam transmitter is configured to transmit a non-diffracting beam, and the non-diffracting beam receiver is configured to receive a non-diffracting beam. The receive end may generate corresponding feedback information based on the received non-diffracting beam, and transmit the feedback information to the transmit end.

A common wave, such as an electromagnetic wave or a sound wave, has a diffraction phenomenon. A wave is accompanied by a divergence phenomenon in a propagation process, and a divergence degree is related to a wavelength. Therefore, even if a lens, an antenna array, or the like is used to restrict a beam, a divergence limit still cannot be broken through, that is, a minimum divergence angle is $1.22\lambda/D$, where $\lambda$ is a wavelength, and D is a diameter of a lens or an antenna (array). If positioning is performed by using a conventional electromagnetic wave, a sound wave, or the like, measurement precision of a positioning parameter is limited due to existence of diffraction. For example, for measurement of an arrival angle or an emergent angle of a signal, a precision error is greater than a minimum divergence angle. For example, for an electromagnetic wave whose wavelength $\lambda$ is 1 cm, a size of an antenna array is 10 cm, and an angle error is greater than 0.12 rad. The measurement error of the parameter results in a calculation error of the positioning result.

In addition, a wave may be blocked by an obstacle during propagation. The wave has a capability of bypassing the obstacle because of a diffraction effect. However, this capability is related to a wavelength. If a size of the obstacle is significantly greater than a wavelength, the wave is difficult to bypass, and is reflected, or a high attenuation occurs when the wave penetrates the obstacle, resulting in a non-line of sight phenomenon. That is, information such as a signal strength, an angle, and a time used for measurement during positioning may be greatly inaccurate, and a positioning result is severely affected.

To resolve the foregoing problem, this application provides a method for positioning by using a non-diffracting beam. A non-diffracting beam is a special solution of wave equation. There are many types of non-diffracting beams, for example, a Bessel beam, an Airy beam, a Mathieu beam, a Weber beam, and the like.

A main lobe of a non-diffracting beam propagates along a specific curve, and energy of the main lobe in a propagation process remains unchanged, that is, no diffusion or diffraction occurs.

Further, a Bessel beam is transmitted in a straight line. Similarly, a Mathieu beam and a Weber beam may be obtained based on the elliptical column coordinate system and the parabolic coordinate system, respectively, so that a non-diffracting propagation feature is also met, and curved propagation may also be implemented. Based on transformation between different coordinate systems, different non-diffracting beam solutions may be actually obtained. Therefore, there are infinite types of non-diffracting beams.

It may be understood that one non-diffracting beam transmitter at a transmit end may transmit a same type of non-diffracting beam to a plurality of receive ends, or may transmit a plurality of types of non-diffracting beams to a plurality of receive ends. Certainly, a plurality of non-diffracting beam transmitters may simultaneously transmit one or more types of non-diffracting beams to one receive end. This is not limited herein.

In an embodiment of this application, the positioning system 1 includes a plurality of transmit ends, and non-diffracting beam transmitters of the plurality of transmit ends may transmit non-diffracting beams to a receive end. In this way, the plurality of transmit ends cooperate with the receive end to implement positioning, so as to improve positioning precision. For example, an anchor node is a transmit end and a position of the anchor node is known, and user equipment is a receive end; and the anchor node transmits a non-diffracting beam to the user equipment to position the user equipment.

In an embodiment of this application, the positioning system 1 includes a plurality of receive ends, and a plurality of transmit ends may transmit a non-diffracting beam to the plurality of receive ends. In this way, the transmit end cooperates with the plurality of receive ends to implement positioning, so as to improve positioning precision. For example, an anchor node is a receive end and a position of the anchor node is known, and user equipment is a transmit end. The user equipment transmits a non-diffracting beam to the anchor node to position the anchor node, determines a positional relationship between the user equipment and the anchor node based on a position obtained through initial positioning and a position of the user equipment, and determines the position of the user equipment by using the known position of the anchor node and the positional relationship, so as to position the user equipment.

There are many methods for generating a non-diffracting beam. For example, a Bessel beam may be generated by inputting a Gaussian beam into an axial cone prism, where a width of the Gaussian beam is 2R, a refractive index of the axial cone prism is n, and an included angle between a cone surface of the prism and a plane is $\alpha$. In this case, the Bessel beam may be generated within a focal depth $R/[(n-1)\alpha]$. A function of the axial cone prism is to provide spatial phase modulation for the Gaussian beam. Therefore, there are other methods for implementing spatial phase modulation, for example, based on liquid crystals or a metasurface. A liquid crystal or metasurface spatial modulator includes a plurality of elements on a plane, and each element generates an additional phase for the incident wave. The additional phase of each element is adjustable, so as to implement spatial phase modulation. The spatial phase modulator may be of a transmissive type or reflective type, that is, the incident light may be modulated after passing through the spatial phase modulator or being reflected by the spatial phase modulator. The phase adjustment method based on the liquid crystal is implemented by applying different voltages to elements to change refractive indexes of the elements. The metasurface uses nanostructure elements to implement phase addition, and changes the phase of each element by using methods such as micromechanical motion, and thermal or electrical excitation of phase change materials.

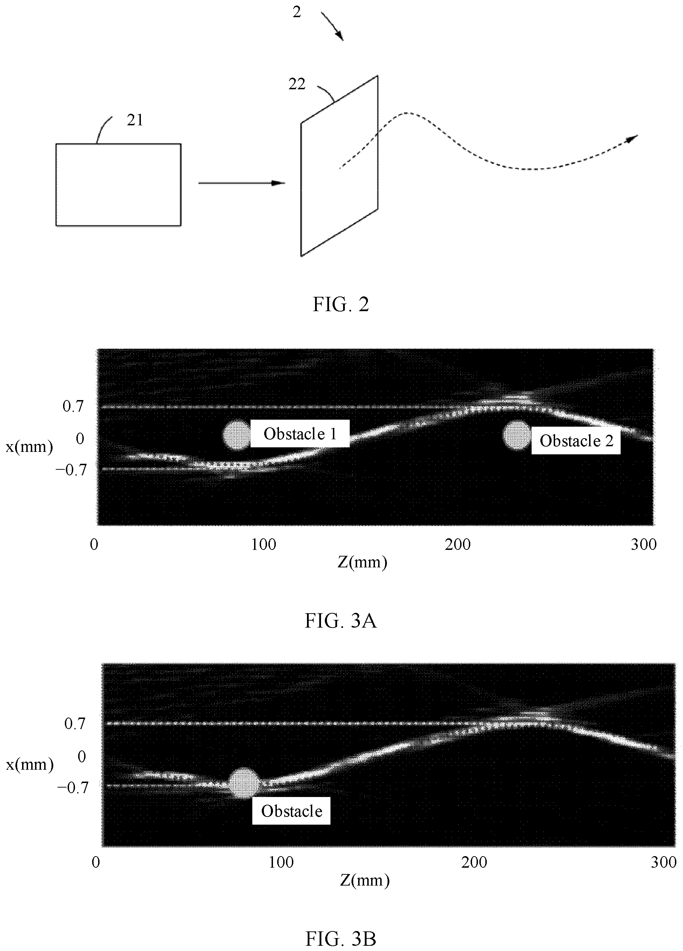

FIG. 2 is a schematic diagram of a non-diffracting beam transmitter according to this application.

The non-diffracting beam transmitter 2 includes an incident beam generator 21 and a spatial modulator 22. The incident beam generator 21 is configured to generate a conventional beam, for example, a Gaussian beam. The beam generated by the incident beam generator 21 is incident to the spatial modulator 22. The spatial modulator 22 adjusts a corresponding phase or amplitude at a plurality of wavefront positions based on a preset setting, to implement spatial modulation, so as to generate a non-diffracting beam with a required propagation trajectory, for example, a straight line trajectory and a curve trajectory.

In an embodiment of this application, because a main lobe width of a non-diffracting beam is limited, a scanning range of a trajectory of each non-diffracting beam is relatively small. In an embodiment, K modulation units adjacent to the spatial modulator 22 are set to provide same modulation, for example, 10 modulation units perform modulation at a same phase value, and a main lobe width of a non-diffracting beam is increased by reducing modulation precision. In particular, a same phase value may be set for all modulation units of the spatial modulator, so that the main lobe width of the non-diffracting beam is maximized.

Certainly, it may be understood that the main lobe width of the non-diffracting beam may be increased in another manner.

In this way, the main lobe width of the non-diffracting beam is increased, to increase a scanning range of each non-diffracting beam, so as to reduce a time for scanning the non-diffracting beam to the receive end, thereby improving positioning efficiency.

In an embodiment of this application, a spatial modulator is divided into two or more subunit arrays, and spatial modulation is separately performed on each input beam, to form two or more non-diffracting beams, so that one transmit end can simultaneously transmit a plurality of non-diffracting beams. A plurality of non-diffracting beams are transmitted to simultaneously position a receive end, so as to improve positioning precision and positioning efficiency.

A wave equation corresponding to a non-diffracting beam has a non-diffracting solution, and a peak intensity of the light field does not change with a propagation distance. To generate a non-diffracting beam represented by a specific equation, wavefront modulation may be performed on the beam, that is, on a surface where a spatial modulator is located, so that a phase and an amplitude of the beam modulated on the surface are equal to the phase and the amplitude in the wave equation. Theoretically, to generate a non-diffracting beam, wavefront modulation needs to be performed on a plane with an infinite size. Therefore, approximate non-diffracting beams need to be generated, that is, transmission can maintain a good non-diffracting feature within a specific distance. Generally, a non-diffracting propagation distance is related to a diameter and a wavelength of the spatial modulator. A larger diameter and a shorter wavelength indicate a longer non-diffracting propagation distance. For a spatial modulator with an aperture of 10 square centimeters, millimeter wave signals can be transmitted without diffraction within several meters to dozens of meters, and terahertz optical waves can be transmitted without diffraction within hundreds of meters to dozens of kilometers. The propagation distance can meet the requirements of positioning applications in various scenarios.

In addition, non-diffracting beams on any propagation trajectory may be generated by using a caustic method. For a two-dimensional curve, a tangent line of a propagation trajectory curve has an intersection point on an axis of a spatial modulator, and a phase of the point may be obtained by using a specific formula. A three-dimensional curve may be decomposed into two two-dimensional curves, that is, projection curves of the three-dimensional curve on two vertical planes XOZ and YOZ. Phases $\varphi(x)$ and $\varphi(y)$ on the x-axis and y-axis on the projection plane are obtained separately, and a phase on the XOY plane may be obtained by using $\varphi(x,y) = \varphi(x) + \varphi(y)$. Therefore, a beam of any curve propagation trajectory can be obtained by performing only phase modulation on each element on the spatial modulator.

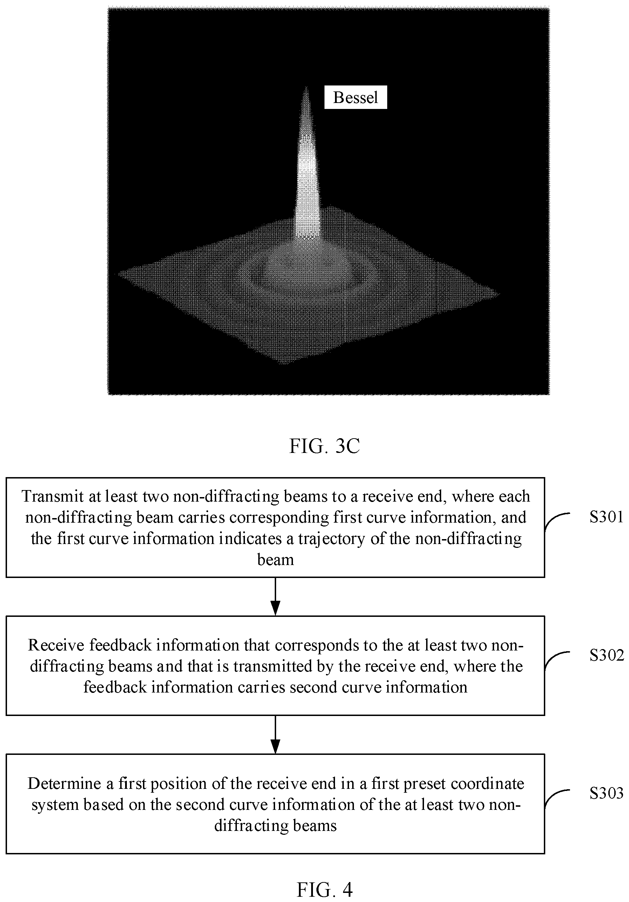

FIG. 3A, FIG. 3B, and FIG. 3C are schematic diagrams of propagation of three non-diffracting beams. As shown in FIG. 3A, a trajectory of the non-diffracting beam is a curve, and the non-diffracting beam of the curve trajectory may be set to bypass an obstacle between the anchor node and the user equipment. As shown in FIG. 3B, the non-diffracting beam has a self-healing feature, that is, a signal can be restored after passing through a small obstacle, thereby alleviating a blocking problem. As shown in FIG. 3C, the non-diffracting beam has a main lobe of a super diffractive beam, which can improve measurement precision of parameters such as an angle.

FIG. 4 is a flowchart of a positioning method according to an embodiment of this application. The positioning method is applied to a positioning system.

It may be understood that, in most positioning scenarios of the user equipment, only coordinates of the user equipment in the X-axis and Y-axis directions in the preset coordinate system need to be positioned, and a height of the user equipment is less concerned. Therefore, the positioning method in this embodiment of this application is used to determine a position of the user equipment in a two-dimensional coordinate system, or a special three-dimensional coordinate system in which a Z-axis direction is 0. Certainly, in this application, only determining coordinates of the user equipment in the X-axis direction and the Y-axis direction is used as an example. The positioning method provided in this application may also be used to determine a position of the user equipment in a three-dimensional coordinate system. That is, the positioning method in this application may obtain height information of the user equipment.

Further, the position of the user equipment is not limited to coordinates in the coordinate system, and may also be longitude information and latitude information, a positional relative to a preset object, or the like. A type of the position of the user equipment is not limited herein, and a proper position type may be selected according to an actual application.

In an embodiment of this application, the positioning method includes:

Step S301: Transmit at least two non-diffracting beams to a receive end, where each non-diffracting beam carries corresponding first curve information, and the first curve information indicates a trajectory of the non-diffracting beam.

Further, the non-diffracting beam is transmitted by the transmit end, and the first curve information further indicates a trajectory of a non-diffracting beam on which the transmit end is located.

It may be understood that the at least two non-diffracting beams have at least two beam trajectories, and each beam trajectory corresponds to one curve equation. For example, a Bessel beam, an Airy beam, a Mathieu beam, and a Weber beam each corresponds to one beam trajectory. Certainly, due to different settings of parameters such as a transmit angle, a same type of beam may also correspond to a plurality of curve trajectories. For example, curve trajectories of two Bessel beams that are transmitted along a transmit angle of 30 degrees and a transmit angle of 60 degrees are different.

In an embodiment, an incident wave generator at the transmit end may transmit a non-diffracting beam and curve information corresponding to the non-diffracting beam to a spatial modulator for spatial modulation, and transmit the non-diffracting beam and the curve information corresponding to the non-diffracting beam to a receive end; and the receive end demodulates the non-diffracting beam by using the non-diffracting beam receiver to obtain corresponding first curve information.

In an embodiment, the receive end may obtain, based on the first curve information, a curve equation corresponding to the non-diffracting beam, and obtain, according to the at least two curve equations, a position of the receive end in the preset coordinate system.

For example, the at least two curve equations determined based on the first curve information are $y = x^2$ and $y^2 = 3x + 4$. In this way, values of x and y may be determined through mathematical calculation. Certainly, in a calculation process, some additional values, for example, values that do not conform to common sense in physics, may be excluded according to a scenario. Details are not described herein.

In this way, in this application, the transmit end only needs to transmit at least two non-diffracting beams to the receive end; and the receive end determines, based on the curve information, curve equations corresponding to the at least two non-diffracting beams, and the two curve equations include two unknown numbers, that is, coordinates of the receive end in the preset coordinate system. In this case, values of the two unknown numbers may be determined through mathematical calculation, where the values are position coordinates of the receive end in the preset coordinates. In this positioning method, the receive end is positioned based on the propagation feature of the non-diffracting beam to improve positioning precision. In addition, in the positioning method, a relatively small quantity of transmit ends need to be deployed, that is, only one transmit end is required to implement positioning, so that deployment costs of the transmit end can be reduced.

It may be understood that, in this embodiment and the following embodiments, the curve equation is in the preset coordinate system, that is, the curve equation is formed based on the preset coordinate system.

It can be understood that the curve equation may be a trajectory equation corresponding to the non-diffracting beam, or may be another equation corresponding to the non-diffracting beam, for example, a trajectory length equation. In this way, the receive end obtains a corresponding equation based on the curve information, and determines the position of the receive end based on the corresponding equation.

It may be understood that, in another embodiment, the positioning method further includes:

Step S302: Receive feedback information that corresponds to the at least two non-diffracting beams and that is transmitted by the receive end, where the feedback information carries second curve information.

The feedback information is generated by the receive end based on the first curve information carried by each received non-diffracting beam that is transmitted by the transmit end. The second curve information indicates a trajectory of a non-diffracting beam on which the receive end is located.

Specifically, after receiving the non-diffracting beam signal, the non-diffracting beam receiver of the receive end records the first curve information; and the receive end generates corresponding feedback information based on the first curve information, where the feedback information includes the second curve information, and transmits the feedback information to the transmit end.

In an embodiment, for the first curve information and the second curve information of a same non-diffracting beam, the first curve information and the second curve information may be of the same content. For example, both the first curve information and the second curve information are an identification value "110", where 110 indicates a curve equation that corresponds to a Mathieu beam and that is stored in a transmit end. Certainly, the first curve information and the second curve information may alternatively be of different content. For example, the first curve information is an identification value " 120", and the second curve information is a curve equation A, but the first curve information and the second curve information indicate a same trajectory of the non-diffracting beam.

Optionally, the receive end determines, based on signal strength of a plurality of received beams of a same type, the beam with the highest signal strength, and generates feedback information corresponding to the non-diffracting beam. For example, the receive end receives a plurality of Mathieu beams, and generates the feedback information based only on the Mathieu beam with the highest signal strength.

Optionally, the feedback information further includes signal strength, and the positioning method further includes:

determining, based on the feedback information, second curve information corresponding to the highest signal strength.

For example, the receive end receives a plurality of pieces of feedback information of a plurality of Airy beams, and performs positioning by determining the Airy beam with the highest signal strength, to improve positioning precision.

Specifically, the receive end receives each non-diffracting beam, records signal strength of each non-diffracting beam, and generates feedback information based on the signal strength and the first curve information carried by each non-diffracting beam. After receiving the feedback information, the transmit end determines, based on the second curve information in the feedback information, signal strength corresponding to a plurality of same non-diffracting beams, and determines, through comparison, a non-diffracting beam that is in the plurality of non-diffracting beams of a same type and that corresponds to the highest signal strength as a positioning basis.

Step S303: Determine a first position of the receive end in a first preset coordinate system based on the second curve information of the at least two non-diffracting beams.

Specifically, the second curve information may be indication information of a non-diffracting beam, and indicates a curve equation corresponding to the trajectory of the non-diffracting beam on which the receive end is located, for example, a curve trajectory equation or a curve length equation. At least two equations may be obtained based on the curve information of the at least two non-diffracting beams, and the position of the receive end may be obtained by solving the two equations. Certainly, the position of the receive end may alternatively be determined by setting content of the second curve information, for example, the second curve information is a trajectory equation corresponding to the non-diffracting beam. Certainly, the second curve information may also be solved in another manner.

It may be understood that, in this embodiment, only a position in the first preset coordinate system is used as an example. In a process of positioning the receive end, the receive end may be positioned by using another type of relative position.

In this way, in this embodiment of this application, a non-diffracting solution exists in a wave equation corresponding to a non-diffracting beam, and a peak intensity of the light field does not change with a propagation distance, that is, a curve trajectory does not change in a propagation process of the non-diffracting beam. The transmit end transmits the non-diffracting beam; the receive end generates feedback information after receiving the non-diffracting beam, and transmits the feedback information to the receive end; and the receive end determines, based on the curve information in the feedback information, the trajectory of the non-diffracting beam on which the receive end is located, and determines the position of the receive end based on the curve information. In this application, a narrow main lobe beam that exceeds a diffraction limit can be implemented by using a non-diffracting beam, to improve positioning precision. One transmit end may transmit at least two non-diffracting beams, so that the receive end can be positioned, and positioning costs are reduced.

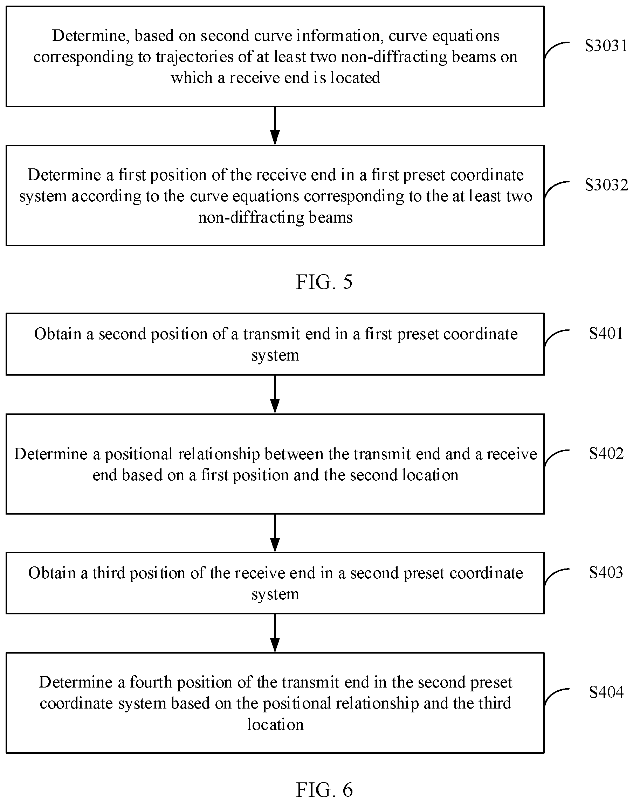

In an embodiment of this application, refer to FIG. 5. Step S303 specifically includes the following steps.

Step S3031: Determine, based on the second curve information, curve equations corresponding to trajectories of the at least two non-diffracting beams on which the receive end is located.

Specifically, the second curve information indicates a trajectory of a non-diffracting beam on which the receive end is located. Each non-diffracting beam corresponds to one curve equation. The curve equation represents the trajectory of the non-diffracting beam, that is, there is an association relationship between the second curve information and the curve equation. The curve equation corresponding to the trajectory of the non-diffracting beam on which the receive end is located may be determined based on the second curve information and the association relationship.

For example, the curve equation corresponding to the non-diffracting beam is $z\cos\theta - x\sin\theta = a(x\cos\theta + z\sin\theta)2$. If $\theta = 01$, strength of the non-diffracting beam received by the receive end is the highest, and the receive end is located on a curve trajectory of the non-diffracting beam whose curve equation is $z\cos\theta1 - x\sin\theta1 = a(x\cos\theta1$

+ zsinθ1)2. For example, θ1 may be 30 degrees.

Step S3032: Determine the first position of the receive end in the first preset coordinate system according to the curve equations corresponding to the at least two non-diffracting beams.

For example, that the to-be-positioned user equipment is in a preset coordinate system is used as an example. The preset coordinate system is a two-dimensional coordinate system XY It is assumed that coordinates of the user equipment in the preset coordinate system are (x, y). It is determined, based on curve information, that the curve equations corresponding to the two non-diffracting beams on which the user equipment is located are a curve equation 1, namely $f(x, y) = 0$, and a curve equation 2, namely $g(x, y)$, where the curve equation 1 and the curve equation 2 are curve equations based on the preset coordinate system XY, two unknown numbers x and y may be obtained through calculation based on the two curve equations, to determine position coordinates of the user equipment, so as to determine the position of the user equipment in the preset coordinate system.

Certainly, the preset coordinate system may alternatively be a three-dimensional coordinate system XYZ. It is assumed that the coordinates of the user equipment in the preset coordinate system are (x, y, z), z may be set to 0, and it is determined, based on the curve information, that two curve equations corresponding to the two non-diffracting beams on which the user equipment is located is a curve equation 1, namely $f(x, y, 0) = 0$, and a curve equation 2, namely $g(x, y, 0)$, where the curve equation 1 and the curve equation 2 are equations based on the preset coordinate system XYZ, two unknown numbers x and y may be obtained through calculation based on the two curve equations, to determine the position coordinates of the user equipment, so as to determine the position of the user equipment in the preset coordinate system.

It may be understood that, in the positioning method, if a height of the user equipment also needs to be obtained, it is assumed that coordinates of the user equipment in the preset coordinate system are (x, y, z), and the curve equations corresponding to the at least three non-diffracting beams on which the user equipment is located are determined based on curve information. For example, the curve equation 1 is $f(x, y, z) = 0$, the curve equation 2 is $g(x, y, z)$, and the curve equation 3 is $h(x, y, z)$. The curve equation 1, the curve equation 2, and the curve equation 3 are equations based on the preset coordinate system XYZ, and three unknown numbers x, y, and z may be obtained through calculation based on the three curve equations, to determine the position coordinates of the user equipment, so as to determine the position of the user equipment in the preset coordinate system.

In this way, in this embodiment of this application, a non-diffracting solution exists in a wave equation corresponding to a non-diffracting beam, and a peak intensity of the light field almost does not change with a propagation distance, that is, a curve trajectory does not change in a propagation process of the non-diffracting beam. The transmit end transmits the non-diffracting beam; the receive end generates feedback information after receiving the non-diffracting beam, and transmits the feedback information to the receive end; and the receive end determines, based on the feedback information, the trajectory of the non-diffracting beam on which the receive end is located, and determines the position of the receive end according to the curve equation corresponding to the trajectory. In this application, a narrow main lobe beam that exceeds a diffraction limit can be implemented by using a non-diffracting beam, to improve positioning precision. One transmit end may transmit at least two non-diffracting beams, so that the receive end can be positioned, and positioning costs are reduced.

Further, if there is an obstacle between the receive end and the transmit end, a non-diffracting beam with a bending trajectory may be selected, so that the trajectory of the non-diffracting beam bypasses the obstacle to reach the receive end.

The non-diffracting beam transmitter of a single transmit end may generate a plurality of types of non-diffracting beams. The transmit end transmits different non-diffracting beams for a plurality of times to detect a position of the receive end, so that one piece of user equipment can be positioned by using a plurality of anchor nodes, thereby reducing deployment costs of the transmit end. In addition, because a main lobe width of a non-diffracting beam is very small, and may even exceed a diffraction limit, higher positioning precision can be achieved. For example, if the wavelength λ of the non-diffracting beam is 1 cm, and the aperture size of the spatial modulator is 10 cm, the precision of positioning angle may be within 0.01 rad.

In an embodiment of this application, if the position of the receive end in a transitional coordinate system is known, for example, (0, 0, 0), the position of the receive end in the preset coordinate system may be obtained by using a positioning method, a positional relationship is determined based on the positions of the receive end and the transmit end in the preset coordinate system, and the position of the transmit end in the transitional coordinate system is determined based on the positional relationship and the position of the receive end in the transitional coordinate system. Specifically, refer to FIG. 6. The positioning method further includes the following steps:

Step S401: Obtain a second position of a transmit end in a first preset coordinate system.

In an embodiment, the transmit end may be located at an origin of the first preset coordinate system, for example, (0, 0, 0). Certainly, in another embodiment, the transmit end may alternatively be at another position in the first preset coordinate system.

Step S402: Determine a positional relationship between the transmit end and the receive end based on the first position and the second position.

For example, coordinates of the transmit end and the receive end in the first preset coordinate system are (0, 0, 0) and (200, 300, 0) respectively. In this case, the transmit end may translate along an X-axis, a Y-axis, or a Z-axis to reach the receive end, and the translation process may be a process of establishing a positional relationship between the transmit end and the receive end.

Certainly, the positional relationship between the transmit end and the receive end may be established in another manner, for example, a mapping relationship table.

Step S403: Obtain a third position of the receive end in a second preset coordinate system.

The second preset coordinate system is established based on the third position of the receive end, for example, the position of the receive end is used as a coordinate origin.

For example, the position coordinates of the receive end in the real scenario, namely the second preset coordinate system, are a coordinate system that is known and used in the real scenario.

Step S404: Determine a fourth position of the transmit end in the second preset coordinate system based on the positional relationship and the third position.

For example, the anchor node is a receive end, the user equipment is a transmit end, and a position of the anchor node is fixed and known. In this case, the transmit end may transmit a non-diffracting beam, the position of the anchor node in the preset coordinate system is obtained by using the foregoing positioning method, the positional relationship between the anchor node and the user equipment is established based on the positions of the transmit end and the receive end in the preset coordinate system, and the position of the user equipment in the transition coordinate system is determined based on the known position of the anchor node in the transition coordinate system.

In this way, the transmit end transmits a non-diffracting beam to the receive end, and the transmit end determines, based on the second curve information in the feedback information transmitted by the receive end, a trajectory of the non-diffracting beam on which the receive end is located, so as to determine the position of the receive end by using the trajectory. In the positioning method, the non-diffracting beam transmitter may be disposed on to-be-positioned user equipment, or may be disposed on an anchor node at a known position by using the foregoing method. If the receive end is an anchor node, after obtaining the position of the anchor node, the receive end determines the actual position of the user equipment based on the positional relationship between the anchor node and the user equipment.

In an embodiment of this application, the anchor node is a base station, and a communication connection may be established between the base station and the user equipment. For example, the base station transmits broadcast information to to-be-positioned user equipment, so that the user equipment establishes a communication connection to the base station. For example, if the user equipment initially accesses the base station, an approximate area of the to-be-positioned user equipment may be determined through an initial access process. The base station serves as the transmit end to transmit a non-diffracting beam to the area, to reduce scanning duration of the transmit end, reducing positioning duration, and improve positioning efficiency.

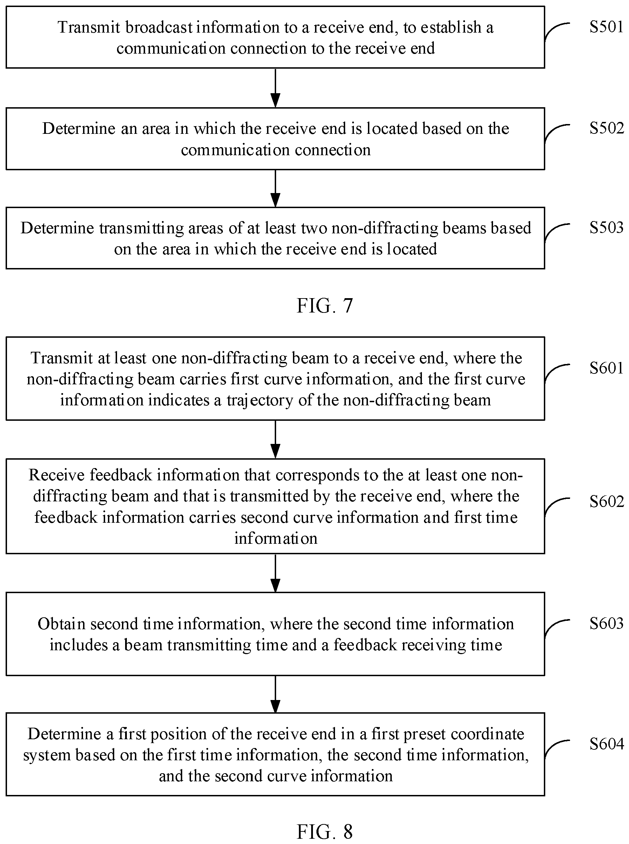

Refer to FIG. 7. The positioning method further includes the following steps.

Step S501: Transmit broadcast information to a receive end, to establish a communication connection to the receive end.

Specifically, the base station transmits the broadcast information to user equipment, so that the user equipment initially accesses the base station.

It may be understood that, in another embodiment, the transmit end and the receive end may establish a communication connection in another manner, which is not limited to transmitting broadcast information.

Step S502: Determine, based on the communication connection, an area in which the receive end is located.

For example, a cell or a tracking area in which user equipment is located is determined by using a communication connection established between a base station and the user equipment, and the cell or the tracking area is an area in which the user equipment is located.

Step S503: Determine transmitting areas of the at least two non-diffracting beams based on the area in which the receive end is located.

In this way, the transmit end transmits the non-diffracting beams to the transmitting areas, to reduce scanning duration in the positioning process.

It may be understood that, in this application, the base station and the user equipment are merely used as an example. It may be understood that the receive end and the transmit end may alternatively implement the pre-positioning of the receive end in another manner, to limit an approximate position of the receive end, so as to limit a transmission range of the non-diffracting beam, and reduce the scanning duration in the positioning process.

It may be understood that non-diffracting beams have a plurality of types of trajectories. For example, a trajectory of a Bessel beam is a straight line trajectory, and trajectories of a Mathieu beam and a Weber beam have an extended bending direction. Therefore, different types of non-diffracting beams may be selected based on different positional relationships or environment statuses between the transmit end and the receive end.

For example, if there is no obstacle between the transmit end and the receive end, and an approximate area of the receive end is known, the transmit end may directly transmit a non-diffracting beam of a straight line trajectory, to implement quick positioning and reduce positioning difficulty. If there are a relatively large quantity of obstacles between the transmit end and the receive end, a non-diffracting beam of a curve trajectory may be selected, so that the non-diffracting beam may be bent in different directions to bypass the obstacle.

In an embodiment, the positioning method further includes:

> determining an environment parameter of the transmit end and the receive end; and
> determining a type of the non-diffracting beam based on the environment parameter.

In an embodiment of this application, the to-be-positioned user equipment needs to determine only coordinates in the X direction and the Y direction in the preset coordinate system, or coordinates in the X direction, the Y direction, and the Z direction, that is, the position coordinates of the to-be-positioned user equipment include two or three unknown numbers. However, when the transmit end transmits at least two (for example, three, four, or five) non-diffracting beams to the receive end based on the non-diffracting beams, it may be determined that the quantity of curve equations is greater than two, the quantity of curve equations is greater than the unknown numbers, and an overdetermined equation set is formed by using a plurality of curve equations.

In an embodiment, for an overdetermined equation set, it is assumed that there are n equation sets and k unknown numbers, n and k are both positive integers, and n>k. P equation sets including only k equations may be constructed. Equations included in each equation set are not completely the same, and P solutions are obtained for each equation set, and then an arithmetic average is obtained to obtain a final solution. The solution is the position coordinates of the receive end.

Certainly, the overdetermined equation set may alternatively be solved in another manner, for example, a Newton method.

Therefore, the positioning method further includes:

> forming an overdetermined equation set according to the curve equations corresponding to the at least three non-diffracting beams; and
> obtaining a solution of the overdetermined equation set, where the solution is a first position of the receive end in a first preset coordinate system.

In this way, the quantity of non-diffracting beams is set to be greater than the quantity of position coordinates of the receive end, for example, greater than 2, and an overdetermined equation set is formed according to the curve equations corresponding to a plurality of non-diffracting beams. The overdetermined equation set is solved to obtain the position coordinates of the receive end, and the overdetermined equation set is formed to use as many non-diffracting beams as possible to position the receive end, so as to improve positioning precision.

In an embodiment of this application, the transmit end may transmit a plurality of non-diffracting beams to the receive end each time. However, signal strength of different non-diffracting beams received by the receive end is usually different, and non-diffracting beams with different signal strength have different degrees of impact on positioning of the receive end. Therefore, a weighted function a(P) is introduced, where a(P) indicates a degree of impact of signal strength on positioning of the receive end, and a new weighted equation a(P)f(x,y.z) = 0 may be obtained, where f(x,y.z) is a curve equation corresponding to a non-diffracting beam. For example, when P is less than P0, a(P) = 0; or when P is not less than P0, a(P) = P. That is, when the signal strength is less than a specific value, a(P) = P, the curve equation corresponding to the non-diffracting beam has a relatively low correlation with the positioning precision of the receive end. If the weighted function a(P) is 0, and the curve equation may be ignored when the position coordinates of the receive end are solved.

In another embodiment, for example, in a process of solving an overdetermined equation set, the following equation is formed:

$$\sum_{j=1}^{m} \sum_{i_j=1}^{n_j} a_{i_j}^2(P_{i_j}) f_{i_j}^2(x, y, z) = 0$$

, to obtain a minimum value that meets the equation, and then obtain position coordinates with a minimum error at the receive end, where $a_{i_j}^2(P_{i_j})$ is a weight, $P_{ij}$ is received signal strength, and f(x,y.z) is a curve equation corresponding to a non-diffracting beam.

In another embodiment, it is assumed that a signal strength range of the non-diffracting beam is (-100 dBm, -30 dBm), and a weighted function may be set to (Q + 100)/10, where Q is signal strength. For example, Q is -85 dBm, and a weighted value is 1.5. The weighted is introduced into a curve equation corresponding to the overdetermined equation set, to improve solving precision of the position of the receive end.

Specifically, in an embodiment of this application, the forming an overdetermined equation set according to the curve equations corresponding to the at least three non-diffracting beams specifically includes:

> determining a weighted value based on the signal strength and a preset weighted function, where the weighted function is used to limit an impact degree of the signal strength; and
> constructing at least three weighted equations:

P(q)f(x, y, z) = 0, where P(q) is a weighted function, q is signal strength, and f(x, y, z) is a curve equation corresponding to the signal strength;
forming an overdetermined equation set based on the at least three weighted equations.

Therefore, a weighted function is introduced, so that non-diffracting beams with different signal strength have different impact degrees on the positioning process.

Certainly, in another embodiment, the weighted function may further indicate an impact degree of a positioning result. For example, if the receive end receives three non-diffracting beams, curve equations corresponding to the three non-diffracting beams may form two equation sets, a weighted value of each non-diffracting beam is determined by using the weighted function, and solutions of the two equation sets are obtained by solving the two equation sets based on the weight.

For example, solutions of the two equation sets are respectively (200, 300) and (201, 304), and weights of two different non-diffracting beams in the two equation sets are respectively 0.4 and 0.6. In this case, (0.4x200 + 0.6x201) = 200.6, (0.4x300 + 0.6x304) = 302.4, and coordinates of the receive end that are adjusted based on the weights are (200.6, 302.4).

Therefore, in an embodiment, the positioning method further includes:

> determining a weighted value based on the signal strength and a preset weighted function, where the weighted function is used to limit an impact degree of the signal strength; and
> adjusting the first position based on the weighted value.

FIG. 8 is a flowchart of a positioning method according to an embodiment of this application. The positioning method is applied to a positioning system. Specifically, the positioning method includes the following steps.

Step S601: Transmit at least one non-diffracting beam to a receive end, where the non-diffracting beam carries first curve information, and the first curve information indicates a trajectory of the non-diffracting beam.

When transmitting the non-diffracting beam to the receive end, the transmit end records a transmitting time of the non-diffracting beam.

In an embodiment, the curve information is sequence information, for example, 00, 01, and each piece of sequence information represents a curve equation corresponding to a trajectory of a non-diffracting beam.

In an embodiment, the curve information is a curve equation corresponding to the non-diffracting beam, and the transmit end or the receive end may determine, by parsing the curve information, the curve equation corresponding to the non-diffracting beam.

Step S602: Receive feedback information that corresponds to the at least one non-diffracting beam and that is transmitted by the receive end, where the feedback information carries second curve information and first time information.

The feedback information is generated by the receive end based on the first curve information carried by the received non-diffracting beam, and the second curve information indicates a trajectory of a non-diffracting beam on which the receive end is located.

The first time information includes a beam receiving time and a feedback transmitting time, the beam receiving time is a time at which the receive end receives the non-diffracting beam, and the feedback transmitting time is a time at which the receive end transmits the feedback information.

Specifically, after receiving the non-diffracting beam signal, the non-diffracting beam receiver of the receive end records the first curve information, the receiving time of the non-diffracting beam, and the transmitting time of the feedback information, and the receive end generates the feedback information based on the first curve information, the receiving time of the non-diffracting beam, and the transmitting time of the feedback information, and transmits the feedback information to the receive end.

Optionally, the receive end determines, based on signal strength of a plurality of received beams of a same type, the beam with the highest signal strength, and generates feedback information corresponding to the beam. For example, the receive end receives a plurality of Mathieu beams, and generates the feedback information based only on the beam with the highest signal strength.

Optionally, the transmit end sets a preset signal strength value. When the signal strength is less than the preset signal strength value, information about the non-diffracting beam corresponding to the signal strength is directly discarded; or when the signal strength is greater than the preset signal strength value, the non-diffracting beam corresponding to the signal strength is used as a basis of the positioning process.

Optionally, the feedback information further includes signal strength. After receiving the non-diffracting beam signal, the non-diffracting beam receiver of the receive end records curve information, and transmits the feedback information to the transmit end by using the feedback information. The positioning method further includes:

determining, based on the feedback information, curve information corresponding to the highest signal strength.

For example, the receive end receives a plurality of pieces of feedback information of a plurality of Airy beams, and determine the Airy beam with the highest signal strength, to improve positioning precision.

Positioning precision of the non-diffracting beam with the highest signal strength is relatively high. Therefore, if the receive end receives a plurality of non-diffracting beams of a same type, the non-diffracting beam with the highest signal strength is selected as a basis for positioning calculation.

Step S603: Obtain second time information, where the second time information includes a beam transmitting time and a feedback receiving time.

The beam transmitting time is a time at which the transmit end transmits the non-diffracting beam, and the feedback receiving time is a time at which the transmit end receives the feedback information of the non-diffracting beam.

Optionally, the transmit end records time when transmitting the non-diffracting beam and receiving the feedback information.

Step S604: Determine a first position of the receive end in a first preset coordinate system based on the first time information, the second time information, and the second curve information.

Specifically, a transmission time of the non-diffracting beam and a transmission time of the feedback information may be determined based on the curve information, a transmission speed may be determined based on a transmission medium of the non-diffracting beam and a feedback message, a trajectory length between the receive end and the transmit end is determined based on the transmission speed and the transmission time, and the first position of the receive end in the first preset coordinate system may be determined through data calculation based on the second curve information and the trajectory length.

In this way, in this embodiment, the feedback information carrying the time information is used to determine the transmission distance by using the time information and the preset transmission medium, the curve length parameter is determined according to the curve equation, the distance equation is constructed based on the curve length parameter, the trajectory length of the feedback information, and the transmission distance, and the position of the receive end in the first preset coordinate system may be obtained based on the distance equation and the curve equation.

In this embodiment, the transmit end determines the position of the receive end in the first preset coordinate system by transmitting the at least one non-diffracting beam.

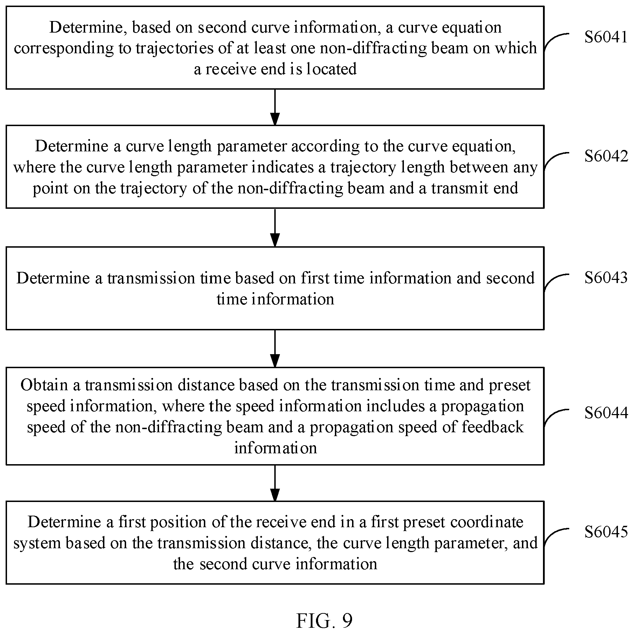

Refer to FIG. 9. In this embodiment of this application, step S604 specifically includes the following steps.

Step S6041: Determine, based on the second curve information, a curve equation corresponding to a trajectory of at least one non-diffracting beam on which the receive end is located.

Optionally, the receive end may store a mapping relationship table between the second curve information and the curve equation, and the receive end may search the mapping relationship table for a curve equation corresponding to the second curve information.

Step S6042: Determine a curve length parameter according to the curve equation, where the curve length parameter indicates a trajectory length between any point on the trajectory of the non-diffracting beam and the transmit end.

For example, the transmit end is located at a coordinate origin, and a curve equation in a two-dimensional coordinate system is y2 = 2px. In this case, a trajectory length of any point on the curve trajectory is L = $(p/2)*\{[(2x/p)^{1/2}*(1 + 2x/p)] + \ln[(2x/p)^{1/2} + (1 + 2x/p)^{1/2}]\}$, and the length is also a distance between any point on the curve trajectory and the coordinate origin.

That is, the distance between any point on the curve trajectory and the origin of the preset coordinate system may be obtained through mathematical calculation according to the curve equation.

Certainly, in the foregoing embodiment, only a two-dimensional coordinate system is used as an example. It may be understood that this application is not limited to the two-dimensional coordinate system, and may be further applied to a three-dimensional coordinate system.

Step S6043: Determine a transmission time based on the first time information and the second time information.

For example, it is assumed that a beam transmitting time is T1, a beam receiving time is T2, a feedback transmitting time is T3, and a feedback receiving time is T4. In this way, a propagation time of a non-diffracting beam is T2-T1, and a propagation time of feedback information is T4-T3.

If feedback information transmission and non-diffracting beam propagation are performed by using a same beam, a beam propagation time is T2-T1 + T4-T3.

If feedback information transmission and non-diffracting beam propagation are performed by using different beams, for example, the feedback information is propagated by using a sound wave, and the non-diffracting beam is propagated by using an electromagnetic wave, a propagation time of the sound wave is T4-T3, and a propagation time of the electromagnetic wave is T2-T1.

Step S6044: Obtain a transmission distance based on the transmission time and preset speed information, where the speed information includes a propagation speed of the non-diffracting beam and a propagation speed of the feedback information.

For example, a propagation time of the non-diffracting beam is T2-T1, and a propagation time of the feedback information is T4-T3. If both the non-diffracting beam and the feedback information are propagated by using an electromagnetic wave, and a propagation speed of the non-diffracting beam and a propagation speed of the feedback information are the same and are both V, a transmission distance is V(T2-T1 + T4-T3); or if the non-diffracting beam is an electromagnetic wave and a transmission speed is V1, and the feedback information is propagated by using a sound wave and a propagation speed is V2, a transmission distance is V1(T2-T1) + V2(T4-T3).

Step S6045: Determine the first position of the receive end in the first preset coordinate system based on the transmission distance, the curve length parameter, and the second curve information.

In an embodiment, the feedback information is propagated along a straight line, and the transmit end is located at an origin of the first preset coordinate system. In this case, a propagation distance of the feedback information (that is, a distance between the receive end and the transmit end) is $\sqrt{x^2 + y^2 + z^2}$, where (x, y, z) are coordinates of the receive end in the first preset coordinate system.

In this case, the distance equation is as follows:

$$S = g(x, y, z) + \sqrt{x^2 + y^2 + z^2}$$

, where S is the transmission distance, and g(x, y, z) is a curve length parameter.

In another embodiment, the feedback information returned by the receive end is carried by a non-diffracting signal, and a curve length parameter h(x, y, z) of a trajectory that is of a non-diffracting beam and that is between the receive end and the transmit end may be obtained according to a curve equation corresponding to the trajectory of the non-diffracting beam.

In this case, the distance equation is: S = g(x, y, z) + h(x, y, z).

Certainly, in this application, only feedback information transmitted in a straight line and feedback information transmitted by using a non-diffracting beam are used as an example. It may be understood that in another embodiment, a corresponding feedback information transmission manner may be selected according to an actual scenario.

In an embodiment, in an example in which the position of the receive end in a two-dimensional coordinate system is determined, a curve equation is y = x2, and the feedback information is transmitted along a straight line. In this case, a distance equation is S = (x² + y² )^{1/2} + g(x, y, z), where g(x, y, z) is a distance from any point on a curve trajectory obtained according to the curve equation to an origin, S is a transmission distance. When the position of the receive end in the two-dimensional coordinate system is determined, z is 0. In this case, the distance equation includes only one unknown number, and a value corresponding to x may be obtained. A value of y is obtained based on the value of x and the curve equation, so as to obtain the position of the receive end in the preset coordinate system.

In an embodiment of this application, the positioning system includes a plurality of transmit ends. In this case, the plurality of transmit ends may transmit a non-diffracting beam to a same receive end. The plurality of transmit ends may separately obtain position coordinates of the receive end in the first preset coordinate system by using the positioning method in the foregoing embodiment, and obtain an average value of the plurality of position coordinates to improve positioning precision. Certainly, a plurality of transmit ends may alternatively be included in one coordinate system through coordinate system transformation or the like. Curve equations or distance equations determined by the plurality of receive ends form an overdetermined equation set, and the overdetermined equation set is solved to obtain position coordinates of the receive end in the first preset coordinate system.

In an embodiment of this application, user equipment is a transmit end, an anchor node is a receive end, a positioning system includes a plurality of receive ends, and the user equipment serves as a transmit end to transmit a non-diffracting beam to the plurality of receive ends. The position of the receive end is obtained according to the positioning method in the foregoing embodiment, and a moving position is obtained based on a positional relationship between the transmit end and the receive end and coordinate system transformation. Therefore, a plurality of receive ends can be disposed to improve positioning precision.

In an embodiment of this application, the method includes:
adjusting a modulation range of the spatial modulator to increase a main lobe width of the non-diffracting beam.

It may be understood that, because the main lobe width of a non-diffracting beam is limited, a scanning range of a trajectory of each non-diffracting beam is relatively small. In an embodiment, K modulation units adjacent to the spatial modulator are set to provide same modulation, for example, 10 modulation units perform modulation at a same phase value, and a main lobe width of a non-diffracting beam is increased by reducing modulation precision. In particular, a same phase value may be set for all modulation units of the spatial modulator, so that the main lobe width of the non-diffracting beam is maximized.

Certainly, it may be understood that the main lobe width of the non-diffracting beam may be increased in another manner.

In this way, the main lobe width of the non-diffracting beam is increased, to increase a scanning range of each non-diffracting beam, so as to reduce a time for the non-diffracting beam to reach the receive end, thereby improving positioning efficiency.

In an embodiment of this application, the method further includes:

controlling transmitters to enable the transmitters to simultaneously transmit non-diffracting beam signals; and
a spatial modulator is divided into two or more subunit arrays, to spatial modulation on input beams separately, so as to form two or more non-diffracting beams and transmit the beams simultaneously. In this way, the non-diffracting beam transmitters can simultaneously transmit a plurality of non-diffracting beams.

Optionally, the to-be-positioned user equipment needs to determine only coordinates in the X direction and the Y direction in the preset coordinate system, or coordinates in the X direction, the Y direction, and the Z direction, that is, the position coordinates of the to-be-positioned user equipment include two or three unknown numbers. However, when the transmit end transmits at least two (for example, three, four, or five) non-diffracting beams to the receive end based on the non-diffracting beams, it may be determined that the quantity of curve equations is greater than two, the quantity of curve equations is greater than the unknown numbers, and an overdetermined equation set is formed by using a plurality of curve equations. In this way, the quantity of non-diffracting beams is set to be greater than the quantity of position coordinates of the receive end, for example, greater than 2, and an overdetermined equation set is formed according to the curve equations corresponding to a plurality of non-diffracting beams. The overdetermined equation set is solved to obtain the position coordinates of the receive end, and the overdetermined equation set is formed to use as many non-diffracting beams as possible to position the receive end, so as to improve positioning precision.

Optionally, the transmit end may transmit a plurality of non-diffracting beams to the receive end each time. However, signal strength of different non-diffracting beams received by the receive end is usually different, and non-diffracting beams with different signal strength have different degrees of impact on positioning of the receive end. Therefore, a weighted function a(P) is introduced, where a(P) indicates a degree of impact of signal strength on positioning of the receive end, and a new weighted equation $a(P)f(x,y.z) = 0$ may be obtained, where $f(x,y.z)$ is a curve equation corresponding to a non-diffracting beam. Therefore, a weighted function is introduced to improve impact of signal strength on a curve equation used in a positioning process, so as to improve positioning precision.

Certainly, in another embodiment, the weighted function may further indicate an impact degree of a positioning result. For example, if the receive end receives three non-diffracting beams, curve equations corresponding to the three non-diffracting beams may form two equation sets, a weighted value of each non-diffracting beam is determined by using the weighted function, and solutions of the two equation sets are obtained by solving the two equation sets based on the weight.

Therefore, in an embodiment, the positioning method further includes:

> determining a weighted value based on the signal strength and a preset weighted function, where the weighted function is used to limit an impact degree of the signal strength; and
> adjusting the first position based on the weighted value.

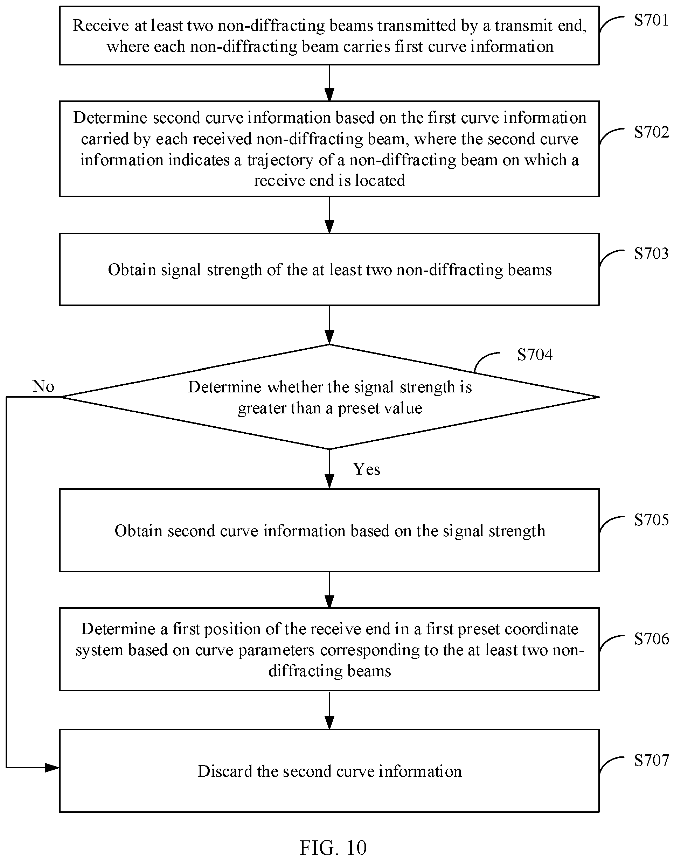

FIG. 10 is a flowchart of a positioning method according to an embodiment of this application. The positioning method is applied to a positioning system. The positioning method in this embodiment is performed by a receive end. Specifically, the positioning method includes the following steps.

Step 701: Receive at least two non-diffracting beams transmitted by a transmit end, where each non-diffracting beam carries first curve information.

In an embodiment of this application, the first curve information is a curve equation corresponding to a non-diffracting beam, and the receive end parses the first curve information to obtain the curve equation corresponding to the non-diffracting beam.

In an embodiment of this application, the first curve information is identification information corresponding to a non-diffracting beam, for example, sequence information. The receive end obtains a corresponding curve equation based on a preset correspondence table and the identification information.

For example, the receive end locally stores a mapping relationship table, and the first curve information may be 01, where 01 represents a curve equation 1: $z\cos\theta - x\sin\theta = a(x\cos\theta + z\sin\theta)^2$.

Step 702: Determine second curve information based on the first curve information carried by each received non-diffracting beam, where the second curve information indicates a trajectory of a non-diffracting beam on which the receive end is located.

Step 703: Obtain signal strength of the at least two non-diffracting beams.

Step 704: Determine whether the signal strength is greater than a preset value.

The preset value may be set based on an environmental condition between the receive end and the transmit end, for example, -70 dBm.

In another embodiment of this application, the preset value is a signal strength range. For example, all non-diffracting beams whose signal strength is between -10 dBm and 10 dBm meet a requirement.

If the signal strength is greater than the preset value, step 705 is performed to obtain corresponding second curve information based on the signal strength.

For example, if the preset value is -70 dBm, and the signal strength is less than -70 dBm, the second curve information is discarded; or if the signal strength is greater than -70 dBm, the corresponding second curve information is determined based on the signal strength, and the corresponding curve equation is obtained based on the second curve information.

Step 706: Determine a first position of the receive end in a first preset coordinate system based on the second curve information of the at least two non-diffracting beams.

In this embodiment, the second curve information is second curve information corresponding to a non-diffracting beam whose signal strength is greater than the preset value.

In an embodiment, the transmit end is located at an origin of the preset coordinate system.

If the signal strength is less than the preset value, step 707 is performed, that is, the second curve information is discarded.

In this way, the receive end receives the at least two non-diffracting beams transmitted by the transmit end, determines curve equations corresponding to the non-diffracting beams based on the curve information, and determines a position of the receive end in the preset coordinate system according to the curve equations, so that the receive end is positioned.

Optionally, the to-be-positioned user equipment needs to determine only coordinates in the X direction and the Y direction in the preset coordinate system, or coordinates in the X direction, the Y direction, and the Z direction, that is, the position coordinates of the to-be-positioned user equipment include two or three unknown numbers. However, when the transmit end transmits at least two (for example, three, four, or five) non-diffracting beams to the receive end based on the non-diffracting beams, it may be determined that the quantity of curve equations is greater than two, the quantity of curve equations is greater than the unknown numbers, and an overdetermined equation set is formed by using a plurality of curve equations. In this way, the quantity of non-diffracting beams is set to be greater than the quantity of position coordinates of the receive end, for example, greater than 2, and an overdetermined equation set is formed according to the curve equations corresponding to a plurality of non-diffracting beams. The overdetermined equation set is solved to obtain the position coordinates of the receive end, and the overdetermined equation set is formed to use as many non-diffracting beams as possible to position the receive end, so as to improve positioning precision.

Optionally, the transmit end may transmit a plurality of non-diffracting beams to the receive end each time. However, signal strength of different non-diffracting beams received by the receive end is usually different, and non-diffracting beams with different signal strength have different degrees of impact on positioning of the receive end. Therefore, a weighted function a(P) is introduced, where a(P) indicates a degree of impact of signal strength on positioning of the receive end, and a new weighted equation $a(P)f(x,y.z) = 0$ may be obtained, where $f(x,y.z)$ is a curve equation corresponding to a non-diffracting beam. Therefore, a weighted function is introduced to improve impact of signal strength on a curve equation used in a positioning process, so as to improve positioning precision.

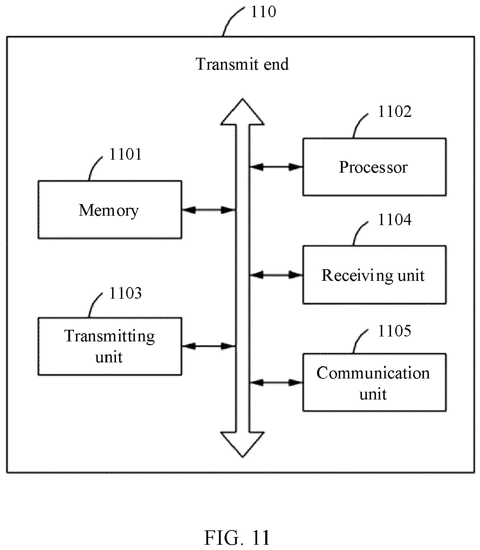

FIG. 11 is a schematic diagram of a transmit end according to an embodiment of this application. The transmit end 110 includes a memory 1101, a processor 1102, and computer-readable instructions that are stored in the memory 1101 and that can be run on the processor 1102, for example, a positioning program. When executing the computer-readable instructions, the processor 1102 implements the steps in the foregoing positioning method embodiments.

In this embodiment, the transmit end 110 further includes a transmitting unit 1103 and a receiving unit 1104. The processor 1102 is coupled to both the transmitting unit 1103 and the receiving unit 1104. The transmitting unit 1103 is configured to transmit a non-diffracting beam to a receive end. The receiving unit 1104 is configured to receive feedback information transmitted by the receive end.

Further, the transmit end 110 further includes a communication unit 1105, and the communication unit 1105 is configured to establish a communication connection to the receive end.

A person skilled in the art may understand that FIG. 11 shows only an example of the transmit end 110, and does not constitute a limitation on the transmit end 110. The transmit end 110 may include more or fewer components than those shown in the figure, or combine some components, or have different component arrangements. For example, the transmit end 110 may further include an input/output device, a network access device, a bus, or the like.

The processor 1102 may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate, a transistor logic device, a discrete hardware component, or the like. The general-purpose processor may be a microprocessor, or the processor 1102 may be any conventional processor, or the like. The processor 1102 is a control center of the transmit end 110, and connects various parts of the entire transmit end 110 by using various interfaces and lines.

The memory 1101 may be configured to store computer-readable instructions. The processor 1102 implements various functions of the transmit end 110 by running or executing the computer-readable instructions or a module stored in the memory 1101 and invoking data stored in the memory 1101. The memory 1101 may mainly include a program storage area and a data storage area. The program storage area may store an operating system, an application required by at least one function, and the like. The data storage area may store data created based on use of the transmit end 110, and the like. In addition, the memory 1101 may include a hard disk, a memory, a plug-in hard disk, a smart media card (Smart Media Card, SMC), a secure digital (Secure Digital, SD) card, a flash memory card (Flash Card), at least one magnetic disk storage device, a flash memory device, a read-only memory (Read-Only Memory, ROM), a random access memory (Random Access Memory, RAM), or another non-volatile/volatile storage device.

When a module integrated in the transmit end 110 is implemented in the form of a software functional module and sold or used as an independent product, the integrated module may be stored in a computer readable storage medium. Based on such an understanding, all or some of the processes in the methods according to embodiments of this application may also be completed by instructing related hardware by using a computer-readable instruction. The computer-readable instruction may be stored in a computer-readable storage medium, and the computer-readable instruction, when executed by a processor, may implement the steps in the foregoing method embodiments. The computer-readable instruction includes computer-readable instruction code, and the computer-readable instruction code may be in the form of source code, object code, or executable files or in some intermediate forms. The computer-readable medium may include: any entity or apparatus capable of carrying the computer-readable instruction code, a recording medium, a USB flash drive, a removable hard disk, a magnetic disk, an optical disc, a computer memory, a read-only memory (ROM), a random access memory (RAM), and the like.

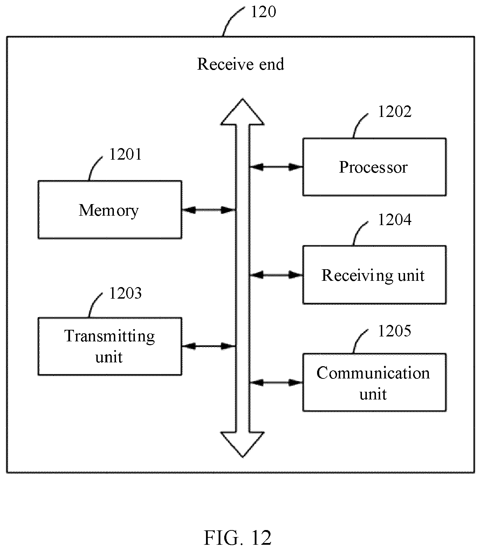

FIG. 12 is a schematic diagram of a receive end according to an embodiment of this application. The receive end 120 includes a memory 1201, a processor 1202, and computer-readable instructions that are stored in the memory 1201 and that can be run on the processor 1202, for example, a positioning program. When executing the computer-readable instructions, the processor 1202 implements the steps in the foregoing positioning method embodiments.

In this embodiment, the receive end 120 further includes a transmitting unit 1203 and a receiving unit 1204. The processor 1202 is coupled to both the transmitting unit 1203 and the receiving unit 1204. The receiving unit 1203 is configured to receive a non-diffracting beam transmitted by a transmit end. The transmitting unit 1104 is configured to transmit feedback information to the transmit end.

Further, the receive end 120 further includes a communication unit 1205, and the communication unit 1205 is configured to establish a communication connection to the receive end.

A person skilled in the art may understand that FIG. 12 shows only an example of the receive end 120, and does not constitute a limitation on the receive end 120. The receive end 120 may include more or fewer components than those shown in the figure, or combine some components, or have different component arrangements. For example, the receive end 120 may further include an input/output device, a network access device, a bus, or the like.

The processor 1202 may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA) or another programmable logic device, a discrete gate, a transistor logic device, a discrete hardware component, or the like. The general-purpose processor may be a microprocessor, or the processor 122 may be any conventional processor, or the like. The processor 1202 is a control center of the receive end 120, and connects various parts of the entire receive end 120 by using various interfaces and lines.

The memory 1201 may be configured to store computer-readable instructions. The processor 1202 implements various functions of the receive end 120 by running or executing the computer-readable instructions or a module stored in the memory 1201 and invoking data stored in the memory 1201. The memory 1201 may mainly include a program storage area and a data storage area. The program storage area may store an operating system, an application required by at least one function, and the like. The data storage area may store data created based on use of the receive end 110, and the like. In addition, the memory 1101 may include a hard disk, a memory, a plug-in hard disk, a smart media card (Smart Media Card, SMC), a secure digital (Secure Digital, SD) card, a flash memory card (Flash Card), at least one magnetic disk storage device, a flash memory device, a read-only memory (Read-Only Memory, ROM), a random access memory (Random Access Memory, RAM), or another non-volatile/volatile storage device.

When a module integrated in the receive end 120 is implemented in the form of a software functional module and sold or used as an independent product, the integrated module may be stored in a computer-readable storage medium. Based on such an understanding, all or some of the processes in the methods according to embodiments of this application may also be completed by instructing related hardware by using a computer-readable instruction. The computer-readable instruction may be stored in a computer-readable storage medium, and the computer-readable instruction, when executed by a processor, may implement the steps in the foregoing method embodiments. The computer-readable instruction includes computer-readable instruction code, and the computer-readable instruction code may be in the form of source code, object code, or executable files or in some intermediate forms. The computer-readable medium may include: any entity or apparatus capable of carrying the computer-readable instruction code, a recording medium, a USB flash drive, a removable hard disk, a magnetic disk, an optical disc, a computer memory, a read-only memory (ROM), a random access memory (RAM), and the like.

An embodiment further provides a computer storage medium. The computer storage medium stores computer instructions. When the computer instructions are run on an electronic device, the electronic device is enabled to perform the foregoing related method steps to implement the positioning method in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, so that the chip performs the positioning method in the foregoing method embodiments.

The apparatus and the computer storage medium according to the embodiments are both configured to perform the corresponding methods provided above. Therefore, for beneficial effects that can be achieved by the apparatus and the computer storage medium, refer to the beneficial effects in the corresponding methods provided above. Details are not described herein again.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. A part displayed as a unit may be one or more physical units, that is, may be located in one place, or may be distributed in a plurality of different places. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A positioning method, wherein the positioning method comprises:

   transmitting at least two non-diffracting beams to a receive end, wherein each non-diffracting beam carries corresponding first curve information, and the first curve information indicates a trajectory of a non-diffracting beam on which a transmit end is located;
   receiving, from the receive end, feedback information corresponding to each non-diffracting beam, wherein the feedback information is generated by the receive end based on the first curve information carried by each received non-diffracting beam, the feedback information comprises second curve information, and the second curve information indicates a trajectory of a non-diffracting beam on which the receive end is located; and
   determining a first position of the receive end based on at least two pieces of second curve information.

2. The positioning method according to claim 1, wherein the feedback information further comprises signal strength, and before the determining a first position of the receive end based on at least two pieces of second curve information, the positioning method further comprises:
   determining, based on the feedback information, second curve information corresponding to the highest signal strength.

3. The positioning method according to claim 1, wherein the determining a first position of the receive end based on at least two pieces of second curve information comprises:

> determining, based on the second curve information, curve equations corresponding to trajectories of at least two non-diffracting beams on which the receive end is located; and determining the first position of the receive end according to the at least two curve equations.

4. The positioning method according to claim 3, wherein if a quantity of non-diffracting beams transmitted to the receive end is greater than or equal to three, the determining the first position of the receive end according to the at least two curve equations comprises:

> forming an overdetermined equation set according to curve equations corresponding to the at least three non-diffracting beams; obtaining a solution of the overdetermined equation set, wherein the solution is coordinates of the receive end in a first preset coordinate system; and determining the first position of the receive end based on the coordinates.

5. The positioning method according to claim 2, wherein the positioning method further comprises:

> determining a weighted value based on the signal strength and a preset weighted function, wherein the weighted function is used to limit an impact degree of the signal strength; and adjusting the first position based on the weighted value.

6. The positioning method according to claim 1, wherein the positioning method further comprises:

> obtaining a second position of the transmit end; determining a positional relationship between the transmit end and the receive end based on the first position and the second position; obtaining a third position of the receive end in a second preset coordinate system, wherein the second preset coordinate system is established based on the third position of the receive end; and determining a fourth position of the transmit end in the second preset coordinate system based on the positional relationship and the third position.

7. The positioning method according to claim 1, wherein the transmit end is provided with a non-diffracting beam transmitter, the non-diffracting beam transmitter comprises a spatial modulator, and the positioning method further comprises:
adjusting a modulation range of the spatial modulator to increase a main lobe width of the non-diffracting beam.

8. The positioning method according to claim 1, wherein before the transmitting at least two non-diffracting beams to a receive end, the positioning method further comprises:

> establishing a communication connection to the receive end; determining an area in which the receive end is located based on the communication connection; and determining transmitting areas of the at least two non-diffracting beams based on the area in which the receive end is located.

9. A positioning method, wherein the positioning method comprises:

> transmitting at least one non-diffracting beams to a receive end, wherein each non-diffracting beam carries corresponding first curve information, and the first curve information indicates a trajectory of a non-diffracting beam on which a transmit end is located; receiving, from the receive end, feedback information corresponding to each non-diffracting beam, wherein the feedback information is generated by the receive end based on the first curve information carried by the received non-diffracting beam, the feedback information comprises second curve information and first time information, the first time information comprises a receiving time at which the receive end receives the non-diffracting beam and a transmitting time at which the receive end transmits the feedback information, and the second curve information indicates a trajectory of a non-diffracting beam on which the receive end is located; obtaining second time information, wherein the second time information comprises a transmitting time at which the transmit end transmits the non-diffracting beam and a receiving time at which the transmit end receives the feedback information; and determining a first position of the receive end based on the first time information, the second time information, and the second curve information.

10. The positioning method according to claim 9, wherein the feedback information further comprises signal strength, and after the feedback information that corresponds to the at least one non-diffracting beam and that is transmitted by the receive end is received, the positioning method further comprises:
determining, based on the feedback information, second curve information and first time information that correspond to the highest signal strength.

11. The positioning method according to claim 9, wherein the determining a first position of the receive end based on the first time information, the second time information, and the second curve information comprises:

determining, based on the second curve information, a curve equation corresponding to the trajectory of the non-diffracting beam on which the receive end is located;
determining a curve length parameter according to the curve equation, wherein the curve length parameter indicates a trajectory length between any point on the trajectory of the non-diffracting beam and the transmit end;
determining a transmission time based on the first time information and the second time information;
obtaining a transmission distance based on the transmission time and preset speed information, wherein the speed information comprises a propagation speed of the non-diffracting beam and a transmission speed of the feedback information; and
determining the first position of the receive end based on the transmission distance, the curve length parameter, and the second curve information.

12. The positioning method according to claim 10, wherein the positioning method further comprises:

determining a weighted value based on the signal strength and a preset weighted function, wherein the weighted function is used to limit an impact degree of the signal strength; and
adjusting the first position based on the weighted value.

13. The positioning method according to claim 9, wherein the positioning method is applied to one transmit end, and the positioning method further comprises:

obtaining a second position of the transmit end;
determining a positional relationship between the transmit end and the receive end based on the first position and the second position;
obtaining a third position of the receive end in a second preset coordinate system, wherein the second preset coordinate system is established based on the third position of the receive end; and
determining a fourth position of the transmit end in the second preset coordinate system based on the positional relationship and the third position.

14. The positioning method according to claim 9, wherein a transmitter is disposed at the transmit end, the transmitter comprises a spatial modulator, and the positioning method further comprises:
adjusting a modulation range of the spatial modulator to increase a main lobe width of the non-diffracting beam.

15. The positioning method according to claim 9, wherein before the transmitting at least one non-diffracting beams to a receive end, the positioning method further comprises:

establishing a communication connection to the receive end;
determining an area in which the receive end is located based on the communication connection; and
determining transmitting areas of the at least two non-diffracting beams based on an area in which the receive end is located.

16. A positioning method, wherein the positioning method comprises:

receiving at least two non-diffracting beams transmitted by a transmit end, wherein each non-diffracting beam carries corresponding first curve information, and the first curve information indicates a trajectory of a non-diffracting beam on which the transmit end is located;
determining second curve information based on the first curve information carried by each received non-diffracting beam, wherein the second curve information indicates a trajectory of a non-diffracting beam on which the receive end is located;
obtaining signal strength information of the at least two non-diffracting beams, wherein the signal strength information comprises signal strength corresponding to each non-diffracting beam;
determining whether the signal strength is greater than a preset value;
if the signal strength is greater than the preset value, obtaining the second curve information of the non-diffracting beam corresponding to the signal strength; and
determining a first position of the receive end based on the second curve information of at least two non-diffracting beams whose signal strength is greater than the preset value.

17. The positioning method according to claim 16, wherein the determining a first position of the receive end based on the second curve information of at least two non-diffracting beams comprises:

obtaining, based on the second curve information, curve equations corresponding to the at least two non-diffracting beams; and

obtaining the first position of the receive end according to the at least two curve equations.

18. The positioning method according to claim 17, wherein if a quantity of non-diffracting beams transmitted to the receive end is greater than or equal to three, the obtaining the first position of the receive end according to the at least two curve equations comprises:

forming an overdetermined equation set according to the curve equations corresponding to the at least three non-diffracting beams;

obtaining a solution of the overdetermined equation set, wherein the solution is coordinates of the receive end in a first preset coordinate system; and

determining the first position of the receive end based on the coordinates.

19. The positioning method according to claim 16, wherein the positioning method further comprises:

determining a weighted value based on the signal strength and a preset weighted function, wherein the weighted function is used to limit an impact degree of the signal strength; and

adjusting the first position based on the weighted value.

20. The positioning method according to claim 16, wherein the positioning method further comprises:

obtaining a second position of the transmit end;

determining a positional relationship between the transmit end and the receive end based on the first position and the second position;

obtaining a third position of the receive end in a second preset coordinate system, wherein the second preset coordinate system is established based on the third position of the receive end; and

determining a fourth position of the transmit end in the second preset coordinate system based on the positional relationship and the third position.

21. A transmit end, wherein the transmit end comprises:

a transmitting unit, configured to transmit at least two non-diffracting beams to a receive end, wherein each non-diffracting beam carries corresponding first curve information, and the first curve information indicates a trajectory of a non-diffracting beam on which a transmit end is located;

a receiving unit, configured to receive, from the receive end, feedback information corresponding to each non-diffracting beam, wherein the feedback information is generated by the receive end based on the first curve information carried by each received non-diffracting beam, the feedback information comprises second curve information, and the second curve information indicates a trajectory of a non-diffracting beam on which the receive end is located; and

a processor, coupled to both the transmitting unit and the receiving unit, and configured to determine a first position of the receive end based on at least two pieces of second curve information.

22. The transmit end according to claim 21, wherein the feedback information further comprises signal strength, and the processor is further configured to: determine, based on the feedback information, second curve information corresponding to the highest signal strength.

23. The transmit end according to claim 21, wherein the processor is further configured to:

determine, based on the second curve information, curve equations corresponding to trajectories of at least two non-diffracting beams on which the receive end is located; and

determine the first position of the receive end according to the at least two curve equations.

24. The transmit end according to claim 23, wherein if a quantity of non-diffracting beams transmitted by the transmit end to the receive end is greater than or equal to three, the processor is further configured to:

form an overdetermined equation set according to the curve equations corresponding to the at least three non-diffracting beams;

obtain a solution of the overdetermined equation set, wherein the solution is coordinates of the receive end in a first preset coordinate system; and

determine the first position of the receive end based on the coordinates.

25. The transmit end according to claim 22, wherein the processor is further configured to:

determine a weighted value based on the signal strength and a preset weighted function, wherein the weighted function is used to limit an impact degree of the signal strength; and
adjust the first position based on the weighted value.

26. The transmit end according to claim 21, wherein the processor is further configured to:

obtain a second position of the transmit end;
determine a positional relationship between the transmit end and the receive end based on the first position and the second position;
obtain a third position of the receive end in a second preset coordinate system, wherein the second preset coordinate system is established based on the third position of the receive end; and
determine a fourth position of the transmit end in the second preset coordinate system based on the positional relationship and the third position.

27. The transmit end according to claim 21, wherein a non-diffracting beam transmitter is disposed in the transmitting unit, the non-diffracting beam transmitter comprises a spatial modulator, and the processor is further configured to:
adjust a modulation range of the spatial modulator to increase a main lobe width of the non-diffracting beam.

28. The transmit end according to claim 21, wherein the processor is further configured to:

establish a communication connection to the receive end;
determine an area in which the receive end is located based on the communication connection; and
determine transmitting areas of the at least two non-diffracting beams based on the area in which the receive end is located.

29. A transmit end, wherein the transmit end comprises:

a transmitting unit, configured to transmit at least one non-diffracting beams to a receive end, wherein each non-diffracting beam carries corresponding first curve information, and the first curve information indicates a trajectory of a non-diffracting beam on which a transmit end is located;
a receiving unit, configured to receive, from the receive end, feedback information corresponding to each non-diffracting beam, wherein the feedback information is generated by the receive end based on the first curve information carried by the received non-diffracting beam, the feedback information comprises second curve information and first time information, the first time information comprises a receiving time at which the receive end receives the non-diffracting beam and a transmitting time at which the receive end transmits the feedback information, and the second curve information indicates a trajectory of a non-diffracting beam on which the receive end is located; and
a processor, coupled to both the transmitting unit and the receiving unit, and configured to obtain second time information, wherein the second time information comprises a transmitting time at which the transmit end transmits the non-diffracting beam and a receiving time at which the transmit end receives the feedback information; and further configured to determine the first position of the receive end based on the first time information, the second time information, and the second curve information.

30. The transmit end according to claim 29, wherein the feedback information further comprises signal strength, and the processor is further configured to: determine, based on the feedback information, second curve information and first time information that correspond to the highest signal strength.

31. The transmit end according to claim 29, wherein the processor is further configured to:

determine, based on the second curve information, a curve equation corresponding to the trajectory of the non-diffracting beam on which the receive end is located;
determine a curve length parameter according to the curve equation, wherein the curve length parameter indicates a trajectory length between any point on the trajectory of the non-diffracting beam and the transmit end;
determine a transmission time based on the first time information and the second time information;
obtain a transmission distance based on the transmission time and preset speed information, wherein the speed information comprises a propagation speed of the non-diffracting beam and a transmission speed of the feedback information; and
determine the first position of the receive end based on the transmission distance, the curve length parameter, and the second curve information.

32. The transmit end according to claim 30, wherein the processor is further configured to:

determine a weighted value based on the signal strength and a preset weighted function, wherein the weighted function is used to limit an impact degree of the signal strength; and adjust the first position based on the weighted value.

33. The transmit end according to claim 29, wherein the processor is further configured to:

obtain a second position of the transmit end; determine a positional relationship between the transmit end and the receive end based on the first position and the second position; obtain a third position of the receive end in a second preset coordinate system, wherein the second preset coordinate system is established based on the third position of the receive end; and determine a fourth position of the transmit end in the second preset coordinate system based on the positional relationship and the third position.

34. The transmit end according to claim 29, wherein a transmitter is disposed in the transmitting unit, the transmitter comprises a spatial modulator, and the processor is further configured to: adjust a modulation range of the spatial modulator to increase a main lobe width of the non-diffracting beam.

35. The transmit end according to claim 29, wherein the transmit end further comprises a communication unit, and the communication unit is configured to establish a communication connection to the receive end; and the processor is further configured to:

determine an area in which the receive end is located based on the communication connection; and determine transmitting areas of the at least two non-diffracting beams based on an area in which the receive end is located.

36. A receive end, wherein the receive end comprises:

a receiving unit, configured to receive at least two non-diffracting beams transmitted by a transmit end, wherein each non-diffracting beam carries corresponding first curve information, and the first curve information indicates a trajectory of a non-diffracting beam on which the transmit end is located; and a processor, coupled to the receiving unit, and configured to determine second curve information based on the first curve information carried by each received non-diffracting beam, wherein the second curve information indicates a trajectory of a non-diffracting beam on which the receive end is located; and further configured to: obtain signal strength information of the at least two non-diffracting beams, wherein the signal strength information comprises signal strength corresponding to each non-diffracting beam; determine whether the signal strength is greater than a preset value; and if the signal strength is greater than the preset value, obtain second curve information of the non-diffracting beam corresponding to the signal strength; and determine a first position of the receive end based on second curve information of at least two non-diffracting beams whose signal strength is greater than the preset value.

37. The receive end according to claim 36, wherein the processor is further configured to:

obtain, based on the second curve information, curve equations corresponding to the at least two non-diffracting beams; and determine the first position of the receive end according to the at least two curve equations.

38. The receive end according to claim 37, wherein if a quantity of non-diffracting beams transmitted by the transmit end to the receive end is greater than or equal to three, the processor is further configured to:

form an overdetermined equation set according to the curve equations corresponding to the at least three non-diffracting beams; obtain a solution of the overdetermined equation set, wherein the solution is coordinates of the receive end in a first preset coordinate system; and determine the first position of the receive end based on the coordinates.

39. The receive end according to claim 36, wherein the processor is further configured to:

determine a weighted value based on the signal strength and a preset weighted function, wherein the weighted function is used to limit an impact degree of the signal strength; and adjust the first position based on the weighted value.

40. The receive end according to claim 36, wherein the processor is further configured to:

obtain a second position of the transmit end; determine a positional relationship between the transmit end and the receive end based on the first position and the second position; obtain a third position of receive end in a second preset coordinate system, wherein the second preset coordinate system is established based on the third position of the receive end; and

determine a fourth position of the transmit end in the second preset coordinate system based on the positional relationship and the third position.

41. A computer-readable storage medium, wherein the computer-readable storage medium stores at least one instruction, and when the at least one instruction is executed by a processor, the positioning method according to any one of claims 1 to 20 is implemented.

FIG. 1

FIG. 2

FIG. 3A

FIG. 3B

FIG. 3C

| |
|---|
| Transmit at least two non-diffracting beams to a receive end, where each non-diffracting beam carries corresponding first curve information, and the first curve information indicates a trajectory of the non-diffracting beam |

S301

| |
|---|
| Receive feedback information that corresponds to the at least two non-diffracting beams and that is transmitted by the receive end, where the feedback information carries second curve information |

S302

| |
|---|
| Determine a first position of the receive end in a first preset coordinate system based on the second curve information of the at least two non-diffracting beams |

S303

FIG. 4

| Determine, based on second curve information, curve equations corresponding to trajectories of at least two non-diffracting beams on which a receive end is located | S3031 |

| Determine a first position of the receive end in a first preset coordinate system according to the curve equations corresponding to the at least two non-diffracting beams | S3032 |

## FIG. 5

| Obtain a second position of a transmit end in a first preset coordinate system | S401 |

| Determine a positional relationship between the transmit end and a receive end based on a first position and the second location | S402 |

| Obtain a third position of the receive end in a second preset coordinate system | S403 |

| Determine a fourth position of the transmit end in the second preset coordinate system based on the positional relationship and the third location | S404 |

## FIG. 6

Transmit broadcast information to a receive end, to establish a communication connection to the receive end ⌐ S501

Determine an area in which the receive end is located based on the communication connection ⌐ S502

Determine transmitting areas of at least two non-diffracting beams based on the area in which the receive end is located ⌐ S503

FIG. 7

Transmit at least one non-diffracting beam to a receive end, where the non-diffracting beam carries first curve information, and the first curve information indicates a trajectory of the non-diffracting beam ⌐ S601

Receive feedback information that corresponds to the at least one non-diffracting beam and that is transmitted by the receive end, where the feedback information carries second curve information and first time information ⌐ S602

Obtain second time information, where the second time information includes a beam transmitting time and a feedback receiving time ⌐ S603

Determine a first position of the receive end in a first preset coordinate system based on the first time information, the second time information, and the second curve information ⌐ S604

FIG. 8

Determine, based on second curve information, a curve equation corresponding to trajectories of at least one non-diffracting beam on which a receive end is located — S6041

Determine a curve length parameter according to the curve equation, where the curve length parameter indicates a trajectory length between any point on the trajectory of the non-diffracting beam and a transmit end — S6042

Determine a transmission time based on first time information and second time information — S6043

Obtain a transmission distance based on the transmission time and preset speed information, where the speed information includes a propagation speed of the non-diffracting beam and a propagation speed of feedback information — S6044

Determine a first position of the receive end in a first preset coordinate system based on the transmission distance, the curve length parameter, and the second curve information — S6045

FIG. 9

Receive at least two non-diffracting beams transmitted by a transmit end, where each non-diffracting beam carries first curve information — S701

Determine second curve information based on the first curve information carried by each received non-diffracting beam, where the second curve information indicates a trajectory of a non-diffracting beam on which a receive end is located — S702

Obtain signal strength of the at least two non-diffracting beams — S703

Determine whether the signal strength is greater than a preset value — S704

No

Yes

Obtain second curve information based on the signal strength — S705

Determine a first position of the receive end in a first preset coordinate system based on curve parameters corresponding to the at least two non-diffracting beams — S706

Discard the second curve information — S707

FIG. 10

110

Transmit end

1102

Processor

1101

Memory

1104

Receiving unit

1103

Transmitting unit

1105

Communication unit

FIG. 11

120

Receive end

1202
Processor

1201
Memory

1204
Receiving unit

1203
Transmitting
unit

1205
Communication
unit

FIG. 12

## INTERNATIONAL SEARCH REPORT

| | International application No. |
|---|---|
| | **PCT/CN2021/112347** |

| **A.** | **CLASSIFICATION OF SUBJECT MATTER** |
|---|---|

H04W 4/029(2018.01)i

According to International Patent Classification (IPC) or to both national classification and IPC

| **B.** | **FIELDS SEARCHED** |
|---|---|

Minimum documentation searched (classification system followed by classification symbols)

H04W; G01S

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 波, 曲线, 位置, 定位, 第一, 第二, 轨迹, 发送, 接收, 反馈, 信号, 强度, 无线, beam, wave, curve, location, position, first, second, path, track+, route, transmit, receiv+, response, signal, intensity, wireless

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 112104972 A (SONY CORP.) 18 December 2020 (2020-12-18)<br>  claims 1-10 | 1-41 |
| A | CN 112637756 A (OPPO GUANGDONG MOBILE TELECOMMUNICATIONS CO., LTD.)<br>09 April 2021 (2021-04-09)<br>  entire document | 1-41 |
| A | CN 112098933 A (ZHANG LAIQI) 18 December 2020 (2020-12-18)<br>  entire document | 1-41 |
| A | CN 106793083 A (DUYI TECHNOLOGY (BEIJING) CO., LTD.) 31 May 2017 (2017-05-31)<br>  entire document | 1-41 |
| A | CN 111896961 A (BEIJING XIAOMI MOBILE SOFTWARE CO., LTD.) 06 November 2020<br>(2020-11-06)<br>  entire document | 1-41 |
| A | WO 2021032267 A1 (NOKIA TECHNOLOGIES OY) 25 February 2021 (2021-02-25)<br>  entire document | 1-41 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 April 2022** | **26 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/112347**

| Patent document cited in search report | | | Publication date (day/month/year) | Patent family member(s) | | | Publication date (day/month/year) |
|---|---|---|---|---|---|---|---|
| CN | 112104972 | A | 18 December 2020 | WO | 2020238829 | A1 | 03 December 2020 |
| CN | 112637756 | A | 09 April 2021 | None | | | |
| CN | 112098933 | A | 18 December 2020 | None | | | |
| CN | 106793083 | A | 31 May 2017 | None | | | |
| CN | 111896961 | A | 06 November 2020 | None | | | |
| WO | 2021032267 | A1 | 25 February 2021 | None | | | |

Form PCT/ISA/210 (patent family annex) (January 2015)